# EUROPEAN PATENT APPLICATION

(11) **EP 4 478 758 A1**
(43) Date of publication of application: **18.12.2024**
(21) Application number: 23773865.3
(22) Date of filing: 21.03.2023
(51) Int. Cl.: H04W 8/24

(54) **TRANSMISSION METHOD AND APPARATUS, TERMINAL, AND STORAGE MEDIUM**

(30) Priority: 25.03.2022 CN 202210307763
(71) Applicant: VIVO MOBILE COMMUNICATION CO., LTD., Dongguan, Guangdong 523863 (CN)
(72) Inventor: WANG, Lihui, Dongguan, Guangdong 523863 (CN); PAN, Xueming, Dongguan, Guangdong 523863 (CN)
(74) Representative: Murgitroyd & Company
(86) International application number: PCT/CN2023/082843
(87) International publication number: WO 2023/179618

(57) **Abstract**

This application discloses a transmission method and apparatus, a terminal, and a storage medium, pertaining to the field of communication technologies. The transmission method in embodiments of this application includes: reporting, by a terminal, first capability information to a network-side device; where the first capability information is used to indicate that the terminal does not expect the network-side device to enable or configure AvailableSlotCounting for the terminal; or in a case that a target condition is met, performing, by the terminal, at least one of the following: determining that a target slot in which a target uplink transmission of the terminal is located is an unavailable slot for the target uplink transmission, or determining that the target slot is not included in a transmission count of the target uplink transmission; not expecting resource overlapping between the target uplink transmission and downlink reception, or not expecting that a switching time between the target uplink transmission and downlink reception to be less than a target time; dropping the target uplink transmission; and performing downlink reception; where the terminal has a half-duplex capability or does not have a full-duplex capability.

## Description

### CROSS-REFERENCE TO RELATED APPLICATIONS

This application claims priority to Chinese Patent Application No. 202210307763.5, filed on March 25, 2022 and entitled "TRANSMISSION METHOD AND APPARATUS, TERMINAL, AND STORAGE MEDIUM", which is incorporated herein by reference in its entirety.

### TECHNICAL FIELD

This application pertains to the field of communication technologies, and specifically, relates to a transmission method and apparatus, a terminal, and a storage medium.

### BACKGROUND

In scenarios such as industrial wireless sensors, video surveillance, and wearable devices, due to vertical industry requirements, complexity of terminals needs to be reduced in terms of the number of receive antennas, the number of transmit antennas, supported bandwidth, data and signal processing time and capability of the terminals, and so on. Such terminals are referred to as reduced-capability terminals (Reduced Capability User Equipment, RedCap UE).

In the related art, when a terminal has no full-duplex capability, the terminal cannot perform uplink transmission and downlink reception at the same time, and a specific time is required for switching from uplink transmission to downlink reception of the terminal or from downlink reception to uplink transmission. When a resource for uplink transmission conflicts with a resource for downlink reception, or when the switching time between uplink transmission and downlink reception of the terminal is less than a switching capability of the terminal or a protocol-specified time, the terminal drops the uplink transmission, resulting in poor uplink coverage.

### SUMMARY

Embodiments of this application provide a transmission method and apparatus, a terminal, and a storage medium, which can resolve the problem of poor uplink coverage.

According to a first aspect, a transmission method is provided, where the method includes:
reporting, by a terminal, first capability information to a network-side device; where the first capability information is used to indicate that the terminal does not expect the network-side device to enable or configure AvailableSlotCounting for the terminal; or
in a case that a target condition is met, performing, by the terminal, at least one of the following:
   determining that a target slot in which a target uplink transmission of the terminal is located is an unavailable slot for the target uplink transmission, or determining that the target slot is not included in a transmission count of the target uplink transmission;
   not expecting resource overlapping between the target uplink transmission and downlink reception, or not expecting that a switching time between the target uplink transmission and downlink reception to be less than a target time;
   dropping the target uplink transmission; and
   performing downlink reception; where
   the terminal has a half-duplex capability or does not have a full-duplex capability.

According to a second aspect, a transmission method is provided, where the method includes:
receiving, by a network-side device, first capability information reported by a terminal, where the first capability information is used to indicate that the terminal does not expect the network-side device to enable or configure AvailableSlotCounting for the terminal; and skipping enabling or configuring, by the network-side device, AvailableSlotCounting for the terminal; or
in a case that a target condition is met, performing, by the network-side device, at least one of the following:
   determining that a target slot in which a target uplink transmission of the terminal is located is an unavailable slot for the target uplink transmission, or determining that the target slot is not included in a transmission count of the target uplink transmission;
   configuring no overlapping resource being present between the target uplink transmission and the downlink reception, or configuring a switching time between the target uplink transmission and downlink reception being not less than the target time;
   dropping a target uplink reception;
   receiving a target uplink transmission; and
   performing downlink transmission; where
   the terminal has a half-duplex capability or does not have a full-duplex capability.

According to a third aspect, a transmission apparatus is provided, where the apparatus includes:
a first transmission module, configured to report first capability information to a network-side device; where the first capability information is used to indicate that the terminal does not expect the network-side device to enable or configure AvailableSlotCounting for the terminal; or
in a case that a target condition is met, perform at least one of the following:
   determining that a target slot in which a target uplink transmission of the terminal is located is an unavailable slot for the target uplink transmission, or determining that the target slot is not included in a transmission count of the target uplink transmission;
   not expecting resource overlapping between the target uplink transmission and downlink reception, or not expecting that a switching time between the target uplink transmission and downlink reception to be less than a target time;
   dropping the target uplink transmission; and
   performing downlink reception; where
   the terminal has a half-duplex capability or does not have a full-duplex capability.

According to a fourth aspect, a transmission apparatus is provided, where the apparatus includes:
a second transmission module, configured to receive first capability information reported by a terminal, where the first capability information is used to indicate that the terminal does not expect a network-side device to enable or configure AvailableSlotCounting for the terminal; and a processing module, configured to skip enabling or configuring AvailableSlotCounting for the terminal; or
the second transmission module is configured to: in a case that a target condition is met, perform at least one of the following:
   determining that a target slot in which a target uplink transmission of the terminal is located is an unavailable slot for the target uplink transmission, or determining that the target slot is not included in a transmission count of the target uplink transmission;
   configuring no overlapping resource being present between the target uplink transmission and the downlink reception, or configuring a switching time between the target uplink transmission and downlink reception being not less than the target time;
   dropping a target uplink reception;
   receiving a target uplink transmission; and
   performing downlink transmission; where
   the terminal has a half-duplex capability or does not have a full-duplex capability.

According to a fifth aspect, a terminal is provided, where the terminal includes a processor and a memory, and a program or instructions capable of running on the processor are stored in the memory. When the program or the instructions are executed by the processor, the steps of the method according to the first aspect are implemented.

According to a sixth aspect, a terminal is provided, including a processor and a communication interface, where
the communication interface is configured to report first capability information to a network-side device; where the first capability information is used to indicate that the terminal does not expect the network-side device to enable or configure AvailableSlotCounting for the terminal; or
the processor is configured to: in a case that a target condition is met, perform at least one of the following:
   determining that a target slot in which a target uplink transmission of the terminal is located is an unavailable slot for the target uplink transmission, or determining that the target slot is not included in a transmission count of the target uplink transmission;
   not expecting resource overlapping between the target uplink transmission and downlink reception, or not expecting that a switching time between the target uplink transmission and downlink reception to be less than a target time;
   dropping the target uplink transmission; and
   performing downlink reception; where
   the terminal has a half-duplex capability or does not have a full-duplex capability.

According to a seventh aspect, a network-side device is provided, where the terminal includes a processor and a memory, and a program or instructions capable of running on the processor are stored in the memory. When the program or the instructions are executed by the processor, the steps of the method according to the second aspect are implemented.

According to an eighth aspect, a network-side device is provided, including a processor and a communication interface, where
the communication interface is configured to receive first capability information reported by a terminal, where the first capability information is used to indicate that the terminal does not expect a network-side device to enable or configure AvailableSlotCounting for the terminal; and the processor is configured to skip enabling or configuring AvailableSlotCounting for the terminal; or
the processor is configured to: in a case that a target condition is met, perform at least one of the following:
   determining that a target slot in which a target uplink transmission of the terminal is located is an unavailable slot for the target uplink transmission, or determining that the target slot is not included in a transmission count of the target uplink transmission;
   configuring no overlapping resource being present between the target uplink transmission and the downlink reception, or configuring a switching time between the target uplink transmission and downlink reception being not less than the target time;
   dropping a target uplink reception;
   receiving a target uplink transmission; and
   performing downlink transmission; where
   the terminal has a half-duplex capability or does not have a full-duplex capability.

According to a ninth aspect, a transmission system is provided, including: a terminal and a network-side device, where the terminal may be configured to perform the steps of the method according to the first aspect, and the network-side device may be configured to perform the steps of the method according to the second aspect.

According to a tenth aspect, a readable storage medium is provided, where a program or instructions are stored in the readable storage medium, and when the program or the instructions are executed by a processor, the steps of the method according to the first aspect are implemented, or the steps of the method according to the second aspect are implemented.

According to an eleventh aspect, a chip is provided, where the chip includes a processor and a communication interface, the communication interface is coupled to the processor, and the processor is configured to run a program or instructions to implement the method according to the first aspect or implement the steps of the method according to the second aspect.

According to a twelfth aspect, a computer program/program product is provided, where the computer program/program product is stored in a storage medium, and the computer program/program product is executed by at least one processor to implement the steps of the method according to the first aspect or the steps of the method according to the second aspect.

In the embodiments of this application, in a case that the terminal reports the first capability information to the network-side device, the terminal does not expect the network-side device to enable or configure AvailableSlotCounting for the terminal; or in a case that the target condition is met, the terminal with a half-duplex capability or without a full-duplex capability performs at least one of the following: determining that a target slot in which a target uplink transmission of the terminal is located is an unavailable slot for the target uplink transmission, or determining that the target slot is not included in the transmission count of the target uplink transmission; not expecting resource overlapping between the target uplink transmission and downlink reception, or not expecting that a switching time between the target uplink transmission and downlink reception to be less than a target time; dropping the target uplink transmission; and performing downlink reception. In the transmission method provided in the embodiments of this application, unified processing can be implemented in a case that an overlapping resource is present between the target uplink transmission and the downlink reception or that the switching time between the target uplink transmission and the downlink reception is insufficient, thus simplifying the behavior and complexity of the terminal. The target slot in which the target uplink transmission of the terminal is located is determined to be an unavailable slot for the target uplink transmission, or the target slot is determined to be not included in the transmission count of the target uplink transmission, and therefore the target uplink transmission can be transmitted in the next available slot. In this way, uplink coverage can be improved.

### BRIEF DESCRIPTION OF DRAWINGS

FIG. 1 is a schematic diagram of a wireless communication system to which the embodiments of this application are applicable;
FIG. 2 is a first schematic flowchart of a transmission method according to an embodiment of this application;
FIG. 3 is a second schematic flowchart of a transmission method according to an embodiment of this application;
FIG. 4 is a first schematic structural diagram of a transmission apparatus according to an embodiment of this application;
FIG. 5 is a second schematic structural diagram of a transmission apparatus according to an embodiment of this application;
FIG. 6 is a schematic structural diagram of a communication device according to an embodiment of this application;
FIG. 7 is a schematic structural diagram of a terminal according to an embodiment of this application; and
FIG. 8 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way are interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other communication systems than an NR system, for example, the 6th generation (6th Generation, 6G) communication system.

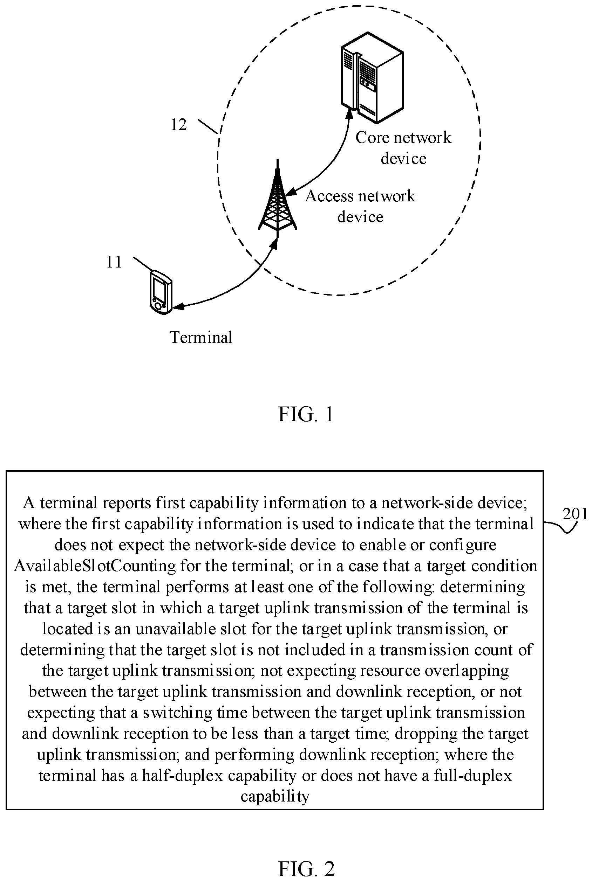

FIG. 1 is a schematic diagram of a wireless communication system to which the embodiments of this application are applicable. The wireless communication system shown in FIG. 1 includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application.

The network-side device 12 may include an access network device or a core network device, where the access network device may also be referred to as a radio access network device, a radio access network (Radio Access Network, RAN), a radio access network function, or a radio access network unit. The access network device may include a base station, a WLAN access point or a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), a location manage function (location manage function, LMF), an enhanced serving mobile location centre (Enhanced Serving Mobile Location Centre, E-SMLC), a network data analytics function (network data analytics function, NWDAF), and the like. It should be noted that, in the embodiments of this application, a core network device in an NR system is used as an example for description, and a specific type of the core network device is not limited.

The following describes in detail a transmission method provided in the embodiments of this application by using some embodiments and application scenarios thereof with reference to the accompanying drawings.

FIG. 2 is a first schematic flowchart of a transmission method according to an embodiment of this application. As shown in FIG. 2, the method includes the following step.

Step 201: A terminal reports first capability information to a network-side device; where the first capability information is used to indicate that the terminal does not expect the network-side device to enable or configure AvailableSlotCounting for the terminal; or
in a case that a target condition is met, the terminal performs at least one of the following:
determining that a target slot in which a target uplink transmission of the terminal is located is an unavailable slot for the target uplink transmission, or determining that the target slot is not included in a transmission count of the target uplink transmission;
not expecting resource overlapping between the target uplink transmission and downlink reception, or not expecting that a switching time between the target uplink transmission and downlink reception to be less than a target time;
   dropping the target uplink transmission; and
   performing downlink reception; where
   the terminal has a half-duplex capability or does not have a full-duplex capability.

For example, in a case that the target condition is met, the terminal determines that the target slot is not included in K slots for the target uplink transmission, where K>1 or K = 1, and K is a positive integer.

It should be noted that this embodiment of this application can be applied to an uplink transmission scenario for a terminal with a half-duplex capability or with no full-duplex capability. The terminal includes a reduced-capability terminal (RedCap UE), such as a RedCap half-duplex (Half Duplex frequency-division duplex, HD-FDD) UE. The network-side device includes, but is not limited to, the types of the network-side device 12 listed above, which is not specifically limited in this application.

Actually, the first capability information is used to indicate that the terminal does not expect the network-side device to enable or configure AvailableSlotCounting for the terminal. The first capability information may include at least one of the following: 1) having a half-duplex capability; and 2) having no full-duplex capability. In a case that the terminal reports the first capability information to the network-side device, the terminal does not expect the network-side device to enable AvailableSlotCounting (AvailableSlotCounting) for the terminal. The network-side device receives the first capability information reported by the terminal, and the network-side device does not enable or configure AvailableSlotCounting for the terminal.

A terminal with a half-duplex capability or a terminal with no full-duplex capability (such as a RedCap HD-FDD UE) does not support a mechanism with an uplink repetition count (such as physical uplink shared channel (PUSCH) repetition Type A or PUCCH) being based on AvailableSlotCounting. For example, when the terminal reports to the network-side device that the terminal is a half-duplex terminal, assuming that the terminal reports RedCap UE with Half-duplex FDD operation type A (operation type A), the terminal does not expect the network-side device to configure or enable AvailableSlotCounting for the terminal.

Optionally, the target condition in this embodiment of the application may include at least one of the following:
1) AvailableSlotCounting is enabled or configured, or AvailableSlotCounting is not enabled or not configured.
   Specifically, the network-side device enables or configures AvailableSlotCounting for the uplink transmission of the terminal, or the network-side device does not enable or configure AvailableSlotCounting for the uplink transmission of the terminal.
2) An overlapping resource is present between the target uplink transmission and the downlink reception.
3) An overlapping resource is not present between the target uplink transmission and the downlink reception, and a switching time between the target uplink transmission and downlink reception is less than the target time.

It should be noted that the switching time between the target uplink transmission and the downlink reception may include at least one of the following: a) a time interval between the last symbol for the target uplink transmission and the first symbol for the downlink reception; and b) a time interval between the last symbol for the downlink reception and the first symbol for the target uplink transmission.

Actually, a case where no overlapping resource is present between the target uplink transmission and the downlink reception and the switching time between the target uplink transmission and the downlink reception is less than the target time can also be referred to as uplink-downlink switching time overlap.

Using downlink transmission as synchronization signal/physical broadcast channel block (Synchronization Signal/PBCH block, SSB) as an example, resources for SSB and uplink transmission (such as PUSCH) do not overlap; however, a switching time from the uplink transmission to the downlink reception is less than a first time, or a switching time from downlink reception to uplink transmission is less than a second time. A value of the target time may include the first time or the second time.

4) The transmission count is greater than 1, or the transmission count is equal to 1.

The transmission count of the uplink transmission may alternatively be referred to as a repetition count K, which may be denoted as K, where K>1 or K=1, and K is a positive integer.

5) The target uplink transmission is a radio resource control (Radio Resource Control, RRC) semi-statically configured uplink transmission; or the target uplink transmission is a dynamically scheduled uplink transmission.

Optionally, the RRC semi-statically configured uplink transmission may include at least one of the following:
a) RRC semi-statically configured physical uplink control channel (Physical Uplink Control Channel, PUCCH) transmission;
b) RRC semi-statically configured configured grant (configured grant) PUSCH type 1 (CG PUSCH Type1);
c) RRC semi-statically configured configured grant PUSCH type 2 (CG PUSCH Type2);
d) remaining CG PUSCH Type 2 other than the first CG PUSCH after CG PUSCH Type2 activated by downlink control information (Downlink Control Information, DCI); and
e) physical random access channel (Physical Random Access Channel, PRACH) transmission.

Specifically, the dynamically scheduled uplink transmission may include at least one of the following:
A) PUSCH scheduled by an UL grant (UL grant), where actually, the uplink grant includes: DCI format 0_0, DCI format 0_1, DCI format 0_2, or the like.
B) The first CG PUSCH after CG PUSCH Type 2 activated by DCI.
C) PUSCH scheduled by a random access response (Random Access Response, RAR) UL grant.
D) PUSCH scheduled by DCI format 0_0 scrambled by temporary cell radio network temporary identifier (Temporary Cell Radio Network Temporary Identifier, TC-RNTI).
E) Dynamically scheduled PUCCH.
F) Dynamically scheduled PRACH, where, for example, the dynamically scheduled PRACH is a PRACH transmission scheduled by PDCCH order.
G) Dynamically scheduled sounding reference signal (Sounding Reference Signal, SRS).

Optionally, the downlink reception may include at least one of the following:
1) SSB;
2) at least one of type 0 common search space (TypeO Common Search Space, Type0 CSS), TypeOA CSS, Type1 CSS, and Type2 CSS; and
3) downlink search space (Search Space, SS) associated with control resource set #0 (CORESET #0).

Specifically, the SSB may include at least one of the following:
a) SSB configured by synchronization broadcast block position in burst (ssb-PositionsInBurst);
b) SSB configured by nonCellDefiningSSB (nonCellDefiningSSB) related signaling;
c) SSB configured by dedicated downlink bandwidth part (BWP-DownlinkDedicated) signaling;
d) SSB configured by terminal-specific signaling (UE-specific signaling); and
e) SSB contained in a current active BWP (active BWP) of the terminal.

Actually, in a case that the terminal determines the target slot in which the target uplink transmission of the terminal is located to be an unavailable slot for the target uplink transmission, or determines the target slot to be not included in the transmission count of the target uplink transmission, the terminal performs the target uplink transmission in a next available slot.

According to the transmission method provided in this embodiment of this application, in a case that the terminal reports the first capability information to the network-side device, the terminal does not expect the network-side device to enable or configure AvailableSlotCounting for the terminal; or in a case that the target condition is met, the terminal with a half-duplex capability or without a full-duplex capability performs at least one of the following: determining that a target slot in which the target uplink transmission of the terminal is located is an unavailable slot for the target uplink transmission, or determining that the target slot is not included in the transmission count of the target uplink transmission; not expecting resource overlapping between the target uplink transmission and downlink reception, or not expecting that a switching time between the target uplink transmission and downlink reception to be less than a target time; dropping the target uplink transmission; and performing downlink reception. In the transmission method provided in this embodiment of this application, unified processing can be implemented in a case that an overlapping resource is present between the target uplink transmission and the downlink reception or that the switching time between the target uplink transmission and the downlink reception is insufficient, thus simplifying the behavior and complexity of the terminal. The target slot in which the target uplink transmission of the terminal is located is determined to be an unavailable slot for the target uplink transmission, or the target slot is determined to be not included in the transmission count of the target uplink transmission, and therefore the target uplink transmission can be transmitted in the next available slot. In this way, uplink coverage can be improved.

In this embodiment of this application, a terminal behavior executed by the terminal based on different target conditions may correspond to at least one of the following cases:
Case 1: In a case that the uplink transmission is configured grant PUSCH repetition transmission (CG PUSCH), or semi-statically configured PUCCH (configured PUCCH), or other PRACH repetition transmission not triggered by PDCCH order, the terminal behavior may include at least one of the following manners:
Manner 1-1: For configured grant PUSCH repetition transmission, or semi-statically configured PUCCH, or PRACH repetition transmission for the half-duplex terminal, regardless of whether AvailableSlotCounting is started/enabled, for the repetition count K=1 or K>1, when the interval between the first symbol for PUSCH or PUCCH or PRACH repetition transmission and the last symbol for synchronization broadcast signal block (SSB) transmission is less than/lower than a first threshold (for example, the first threshold is NRX-TX*Tc), and/or when the interval between the last symbol for PUSCH or PUCCH or PRACH repetition transmission and the first symbol for synchronization broadcast signal block (SSB) transmission is less than/lower than a second threshold (for example, the second threshold is NTX-RX*Tc), the HD-FDD UE determines that a slot in which the PUSCH or PUCCH or PRACH is located is an unavailable slot or the slot is not included in K slots for PUSCH transmission, and the HD-FDD UE postpones PUSCH or PUCCH or PRACH repetition transmission to a next available slot.

Optionally, Tc represents a basic time unit (Basic time unit); NRX-TX represents the switching time from the downlink reception to the uplink transmission; NTX-RX indicates the switching time from the uplink transmission to the downlink reception.

Manner 1-2: For configured grant PUSCH repetition transmission, or semi-statically configured PUCCH, or PRACH repetition transmission for the half-duplex terminal, regardless of whether AvailableSlotCounting is started/enabled, for the repetition count K=1 or K>1, when the interval between the first symbol for PUSCH or PUCCH or PRACH repetition transmission and the last symbol for synchronization broadcast signal block (SSB) transmission is less than/lower than NRX-TX*Tc, and/or when the interval between the last symbol for PUSCH or PUCCH or PRACH repetition transmission and the first symbol for synchronization broadcast signal block (SSB) transmission is less than/lower than NTX-RX*Tc, the HD-FDD UE does not perform or drops PUSCH or PUCCH or PRACH transmission.

Case 2: In a case that the uplink transmission is DG (such as PUSCH repetition scheduled by DCI format 0_1 or 0_2), or dynamic PUCCH (such as dynamic PUCCH scheduled by PDCCH), or PRACH triggered by PDCCH order, the terminal behavior may include at least one of the following manners:
Manner 2-1: For PUSCH repetition transmission scheduled by uplink DCI format, or PUCCH transmission scheduled by DCI, or PRACH triggered by PDCCH order for the half-duplex terminal, regardless of whether AvailableSlotCounting is started/enabled, for the repetition count K=1 or K>1, when the interval between the first symbol for PUSCH or PUCCH or PRACH repetition transmission and the last symbol for synchronization broadcast signal block (SSB) transmission is less than/lower than NRX-TX*Tc, and/or when the interval between the last symbol for PUSCH or PUCCH or PRACH repetition transmission and the first symbol for synchronization broadcast signal block (SSB) transmission is less than/lower than NTX-RX*Tc, the HD-FDD UE determines that a slot in which the PUSCH or PUCCH or PRACH is located is an unavailable slot, or the slot is not included in K slots for PUSCH or PUCCH or PRACH transmission, and the HD-FDD UE postpones PUSCH or PUCCH or PRACH repetition transmission to a next available slot.

Manner 2-2: For PUSCH repetition transmission scheduled by uplink DCI format, or PUCCH transmission scheduled by DCI, or PRACH triggered by PDCCH order for the half-duplex terminal, regardless of whether AvailableSlotCounting is started/enabled, for the repetition count K=1 or K>1, when the interval between the first symbol for PUSCH or PUCCH or PRACH repetition transmission and the last symbol for synchronization broadcast signal block (SSB) transmission is less than/lower than NRX-TX*Tc, and/or when the interval between the last symbol for PUSCH or PUCCH or PRACH repetition transmission and the first symbol for synchronization broadcast signal block (SSB) transmission is less than/lower than NTX-RX*Tc, the HD-FDD UE does not perform PUSCH or PUCCH or PRACH transmission, that is, the HD-FDD UE determines that a slot in which the PUSCH or PUCCH or PRACH is located is an available slot, or the slot is included in K slots for PUSCH or PUCCH or PRACH transmission.

Manner 2-3: For PUSCH repetition transmission scheduled by uplink DCI format, or PUCCH transmission scheduled by DCI, or PRACH triggered by PDCCH order for the half-duplex terminal, regardless of whether AvailableSlotCounting is started/enabled, for the repetition count K=1 or K>1, the HD-FDD UE does not expect an interval between the first symbol for PUSCH or PUCCH or PRACH repetition transmission and the last symbol for synchronization broadcast signal block (SSB) transmission to be less than/lower than NRX-TX*Tc, and/or the HD-FDD UE does not expect an interval between the last symbol for PUSCH or PUCCH or PRACH repetition transmission and the first symbol for synchronization broadcast signal block (SSB) transmission to be less than/lower than NTX-RX*Tc.

Case 3: In a case that the uplink transmission is CG PUSCH, or configured PUCCH, or other PRACH repetition transmissions not triggered by PDCCH order, the terminal behavior may include at least one of the following manners:
Manner 3-1: For configured grant PUSCH repetition transmission or semi-statically configured PUCCH or other PRACH repetition transmissions not triggered by PDCCH order for the half-duplex terminal:
1) When AvailableSlotCounting is started/enabled, for the repetition count K=1 or K>1, when the interval between the first symbol for PUSCH or PUCCH or PRACH repetition transmission and the last symbol for synchronization broadcast signal block (SSB) transmission is less than/lower than NRX-TX*Tc, and/or when the interval between the last symbol for PUSCH or PUCCH or PRACH repetition transmission and the first symbol for synchronization broadcast signal block (SSB) transmission is less than/lower than NTX-RX*Tc, the HD-FDD UE determines that a slot in which the PUSCH or PUCCH or PRACH is located is an unavailable slot or the slot is not included in K slots for PUSCH transmission, and the HD-FDD UE postpones PUSCH or PUCCH or PRACH repetition transmission to a next available slot.
2) When AvailableSlotCounting is not started/enabled, for the repetition count K=1 or K>1, when the interval between the first symbol for PUSCH or PUCCH or PRACH repetition transmission and the last symbol for synchronization broadcast signal block (SSB) transmission is less than/lower than NRX-TX*Tc, and/or when the interval between the last symbol for PUSCH or PUCCH or PRACH repetition transmission and the first symbol for synchronization broadcast signal block (SSB) transmission is less than/lower than NTX-RX*Tc, the HD-FDD UE does not perform or drops PUSCH or PUCCH or PRACH transmission.

Case 4: In a case that the uplink transmission is DG, or dynamic PUCCH, or PRACH triggered by PDCCH order, the terminal behavior may include at least one of the following manners:
Manner 4-1: For PUSCH repetition transmission scheduled by uplink DCI format or PUCCH transmission scheduled by DCI or PRACH triggered by PDCCH order for the half-duplex terminal:
1) When AvailableSlotCounting is started/enabled, for the repetition count K=1 or K>1, when the interval between the first symbol for PUSCH or PUCCH or PRACH repetition transmission and the last symbol for synchronization broadcast signal block (SSB) transmission is less than/lower than NRX-TX*Tc, and/or when the interval between the last symbol for PUSCH or PUCCH or PRACH repetition transmission and the first symbol for synchronization broadcast signal block (SSB) transmission is less than/lower than NTX-RX*Tc, the HD-FDD UE determines that a slot in which the PUSCH is located is an unavailable slot or the slot is not included in K slots for PUSCH or PUCCH or PRACH transmission, and the HD-FDD UE postpones PUSCH or PUCCH or PRACH repetition transmission to a next available slot.
2) When AvailableSlotCounting is not started/enabled, for the repetition count K=1 or K>1, the HD-FDD UE does not expect the interval between the first symbol for PUSCH or PUCCH or PRACH repetition transmission and the last symbol for synchronization broadcast signal block (SSB) transmission to be less than/lower than NRX-TX*Tc, and/or the HD-FDD UE does not expect the interval between the last symbol for PUSCH or PUCCH or PRACH repetition transmission and the first symbol for synchronization broadcast signal block (SSB) transmission to be less than/lower than NTX-RX*Tc.

Manner 4-2: For PUSCH repetition transmission scheduled by uplink DCI format or PUCCH transmission scheduled by DCI or PRACH triggered by PDCCH order for the half-duplex terminal:
1) When AvailableSlotCounting is started/enabled, for the repetition count K=1 or K>1, when the interval between the first symbol for PUSCH or PUCCH or PRACH repetition transmission and the last symbol for synchronization broadcast signal block (SSB) transmission is less than/lower than NRX-TX*Tc, and/or when the interval between the last symbol for PUSCH or PUCCH or PRACH repetition transmission and the first symbol for synchronization broadcast signal block (SSB) transmission is less than/lower than NTX-RX*Tc, the HD-FDD UE does not transmit the PUSCH or PUCCH or PRACH, that is, the HD-FDD UE determines that a slot in which the PUSCH or PUCCH or PRACH is located is an available slot or the slot is included in K slots for PUSCH transmission.
2) When AvailableSlotCounting is not started/enabled, for the repetition count K=1 or K>1, the HD-FDD UE does not expect the interval between the first symbol for PUSCH or PUCCH or PRACH repetition transmission and the last symbol for synchronization broadcast signal block (SSB) transmission to be less than/lower than NRX-TX*Tc, and/or the HD-FDD UE does not expect the interval between the last symbol for PUSCH or PUCCH or PRACH repetition transmission and the first symbol for synchronization broadcast signal block (SSB) transmission to be less than/lower than NTX-RX*Tc.

Manner 4-3: For PUSCH repetition transmission scheduled by uplink DCI format or PUCCH transmission scheduled by DCI or PRACH triggered by PDCCH order for the half-duplex terminal:
1) When AvailableSlotCounting is started/enabled, for the repetition count K=1 or K>1, when the interval between the first symbol for PUSCH or PUCCH or PRACH repetition transmission and the last symbol for synchronization broadcast signal block (SSB) transmission is less than/lower than NRX-TX*Tc, and/or when the interval between the last symbol for PUSCH or PUCCH or PRACH repetition transmission and the first symbol for synchronization broadcast signal block (SSB) transmission is less than/lower than NTX-RX*Tc, the HD-FDD UE determines that a slot in which the PUSCH or PUCCH or PRACH is located is an unavailable slot or the slot is not included in K slots for PUSCH transmission, and the HD-FDD UE postpones PUSCH or PUCCH or PRACH repetition transmission to a next available slot.
2) When AvailableSlotCounting is not started/enabled, for the repetition count K=1 or K>1, the HD-FDD UE does not expect the interval between the first symbol for PUSCH or PUCCH or PRACH repetition transmission and the last symbol for synchronization broadcast signal block (SSB) transmission to be less than/lower than NRX-TX*Tc, and/or the HD-FDD UE does not expect the interval between the last symbol for PUSCH or PUCCH or PRACH repetition transmission and the first symbol for synchronization broadcast signal block (SSB) transmission to be less than/lower than NTX-RX*Tc.

Case 5: In a case that the uplink transmission is CG PUSCH, or configured PUCCH, or other PRACH repetition transmissions not triggered by PDCCH order, the terminal behavior may include at least one of the following manners:
Manner 5-1: For configured grant PUSCH repetition transmission or semi-statically configured PUCCH or other PRACH repetition transmissions not triggered by PDCCH order for the half-duplex terminal:
1) When AvailableSlotCounting is started/enabled:
   (a) For the repetition count K>1, when the interval between the first symbol for PUSCH repetition transmission and the last symbol for synchronization broadcast signal block (SSB) transmission is less than/lower than NRX-TX*Tc, and/or when the interval between the last symbol for PUSCH or PUCCH or PRACH repetition transmission and the first symbol for synchronization broadcast signal block (SSB) transmission is less than/lower than NTX-RX*Tc, the HD-FDD UE determines that a slot in which the PUSCH or PUCCH or PRACH is located is an unavailable slot or the slot is not included in K slots for PUSCH transmission, and the HD-FDD UE postpones PUSCH or PUCCH or PRACH repetition transmission to a next available slot.
   (b) For the repetition count K=1, when the interval between the first symbol for PUSCH repetition transmission and the last symbol for synchronization broadcast signal block (SSB) transmission is less than/lower than NRX-TX*Tc, and/or when the interval between the last symbol for PUSCH or PUCCH or PRACH repetition transmission and the first symbol for synchronization broadcast signal block (SSB) transmission is less than/lower than NTX-RX*Tc, the HD-FDD UE does not transmit the PUSCH or PUCCH or PRACH, that is, the HD-FDD UE determines that a slot in which the PUSCH or PUCCH or PRACH is located is an available slot or the slot is included in K slots for PUSCH or PUCCH or PRACH transmission.
2) When AvailableSlotCounting is not started/enabled, for the repetition count K=1 or K>1, when the interval between the first symbol for PUSCH or PUCCH or PRACH repetition transmission and the last symbol for synchronization broadcast signal block (SSB) transmission is less than/lower than NRX-TX*Tc, and/or when the interval between the last symbol for PUSCH or PUCCH or PRACH repetition transmission and the first symbol for synchronization broadcast signal block (SSB) transmission is less than/lower than NTX-RX*Tc, the HD-FDD UE does not transmit the PUSCH or PUCCH or PRACH, that is, the HD-FDD UE determines that a slot in which the PUSCH or PUCCH or PRACH is located is an available slot or the slot is included in K slots for PUSCH or PUCCH or PRACH transmission.

Case 6: In a case that the uplink transmission is DG, or dynamic PUCCH, or PRACH triggered by PDCCH order, the terminal behavior may include at least one of the following manners:
Manner 6-1: For PUSCH repetition transmission scheduled by uplink DCI format or PUCCH transmission scheduled by DCI or PRACH triggered by PDCCH order for the half-duplex terminal:
1) When AvailableSlotCounting is started/enabled:
   (a) For the repetition count K>1, when the interval between the first symbol for PUSCH or PUCCH or PRACH repetition transmission and the last symbol for synchronization broadcast signal block (SSB) transmission is less than/lower than NRX-TX*Tc, and/or when the interval between the last symbol for PUSCH or PUCCH or PRACH repetition transmission and the first symbol for synchronization broadcast signal block (SSB) transmission is less than/lower than NTX-RX*Tc, the HD-FDD UE determines that a slot in which the PUSCH or PUCCH or PRACH is located is an unavailable slot or the slot is not included in K slots for PUSCH or PUCCH or PRACH transmission, and the HD-FDD UE postpones PUSCH or PUCCH or PRACH repetition transmission to a next available slot.
   (b) For the repetition count K=1, the HD-FDD UE does not expect the interval between the first symbol for PUSCH or PUCCH or PRACH repetition transmission and the last symbol for synchronization broadcast signal block (SSB) transmission to be less than/lower than NRX-TX*Tc, and/or the HD-FDD UE does not expect the interval between the last symbol for PUSCH or PUCCH or PRACH repetition transmission and the first symbol for synchronization broadcast signal block (SSB) transmission to be less than/lower than NTX-RX*Tc.
2) When AvailableSlotCounting is not started/enabled, for the repetition count K=1 or K>1, the HD-FDD UE does not expect the interval between the first symbol for PUSCH or PUCCH or PRACH repetition transmission and the last symbol for synchronization broadcast signal block (SSB) transmission to be less than/lower than NRX-TX*Tc, and/or the HD-FDD UE does not expect the interval between the last symbol for PUSCH or PUCCH or PRACH repetition transmission and the first symbol for synchronization broadcast signal block (SSB) transmission to be less than/lower than NTX-RX*Tc.

Manner 6-2: For PUSCH repetition transmission scheduled by uplink DCI format or PUCCH transmission scheduled by DCI or PRACH triggered by PDCCH order for the half-duplex terminal:
1) When AvailableSlotCounting is started/enabled:
   (a) For the repetition count K>1, when the interval between the first symbol for PUSCH or PUCCH or PRACH repetition transmission and the last symbol for synchronization broadcast signal block (SSB) transmission is less than/lower than NRX-TX*Tc, and/or when the interval between the last symbol for PUSCH or PUCCH or PRACH repetition transmission and the first symbol for synchronization broadcast signal block (SSB) transmission is less than/lower than NTX-RX*Tc, the HD-FDD UE does not transmit the PUSCH or PUCCH or PRACH, that is, the HD-FDD UE determines that a slot in which the PUSCH or PUCCH or PRACH is located is an available slot or the slot is included in K slots for PUSCH or PUCCH or PRACH transmission.
   (b) For the repetition count K=1, the HD-FDD UE does not expect the interval between the first symbol for PUSCH or PUCCH or PRACH repetition transmission and the last symbol for synchronization broadcast signal block (SSB) transmission to be less than/lower than NRX-TX*Tc, and/or the HD-FDD UE does not expect the interval between the last symbol for PUSCH or PUCCH or PRACH repetition transmission and the first symbol for synchronization broadcast signal block (SSB) transmission to be less than/lower than NTX-RX*Tc.
2) When AvailableSlotCounting is not started/enabled, for the repetition count K=1 or K>1, the HD-FDD UE does not expect the interval between the first symbol for PUSCH or PUCCH or PRACH repetition transmission and the last symbol for synchronization broadcast signal block (SSB) transmission to be less than/lower than NRX-TX*Tc, and/or the HD-FDD UE does not expect the interval between the last symbol for PUSCH or PUCCH or PRACH repetition transmission and the first symbol for synchronization broadcast signal block (SSB) transmission to be less than/lower than NTX-RX*Tc.

Manner 6-3: For PUSCH repetition transmission scheduled by uplink DCI format or PUCCH transmission scheduled by DCI or PRACH triggered by PDCCH order for the half-duplex terminal:
1) When AvailableSlotCounting is started/enabled:
   (a) For the repetition count K>1, when the interval between the first symbol for PUSCH or PUCCH or PRACH repetition transmission and the last symbol for synchronization broadcast signal block (SSB) transmission is less than/lower than NRX-TX*Tc, and/or when the interval between the last symbol for PUSCH or PUCCH or PRACH repetition transmission and the first symbol for synchronization broadcast signal block (SSB) transmission is less than/lower than NTX-RX*Tc, the HD-FDD UE determines that a slot in which the PUSCH or PUCCH or PRACH is located is an unavailable slot or the slot is not included in K slots for PUSCH or PUCCH or PRACH transmission, and the HD-FDD UE postpones PUSCH or PUCCH or PRACH repetition transmission to a next available slot.
   (b) For the repetition count K=1, when the interval between the first symbol for PUSCH or PUCCH or PRACH repetition transmission and the last symbol for synchronization broadcast signal block (SSB) transmission is less than/lower than NRX-TX*Tc, and/or when the interval between the last symbol for PUSCH or PUCCH or PRACH repetition transmission and the first symbol for synchronization broadcast signal block (SSB) transmission is less than/lower than NTX-RX*Tc, the HD-FDD UE does not transmit the PUSCH or PUCCH or PRACH, that is, the HD-FDD UE determines that a slot in which the PUSCH or PUCCH or PRACH is located is an available slot or the slot is included in K slots for PUSCH or PUCCH or PRACH transmission.
2) When AvailableSlotCounting is not started/enabled, for the repetition count K=1 or K>1, the HD-FDD UE does not expect the interval between the first symbol for PUSCH or PUCCH or PRACH repetition transmission and the last symbol for synchronization broadcast signal block (SSB) transmission to be less than/lower than NRX-TX*Tc, and/or the HD-FDD UE does not expect the interval between the last symbol for PUSCH or PUCCH or PRACH repetition transmission and the first symbol for synchronization broadcast signal block (SSB) transmission to be less than/lower than NTX-RX*Tc.

Manner 6-4: For PUSCH repetition transmission scheduled by uplink DCI format or PUCCH transmission scheduled by DCI or PRACH triggered by PDCCH order for the half-duplex terminal:
1) When AvailableSlotCounting is started/enabled:
   (a) For the repetition count K>1, when the interval between the first symbol for PUSCH or PUCCH or PRACH repetition transmission and the last symbol for synchronization broadcast signal block (SSB) transmission is less than/lower than NRX-TX*Tc, and/or when the interval between the last symbol for PUSCH or PUCCH or PRACH repetition transmission and the first symbol for synchronization broadcast signal block (SSB) transmission is less than/lower than NTX-RX*Tc, the HD-FDD UE determines that a slot in which the PUSCH or PUCCH or PRACH is located is an unavailable slot or the slot is not included in K slots for PUSCH or PUCCH or PRACH transmission, and the HD-FDD UE postpones PUSCH or PUCCH or PRACH repetition transmission to a next available slot.
   (b) For the repetition count K=1, when the interval between the first symbol for PUSCH or PUCCH or PRACH repetition transmission and the last symbol for synchronization broadcast signal block (SSB) transmission is less than/lower than NRX-TX*Tc, and/or when the interval between the last symbol for PUSCH or PUCCH or PRACH repetition transmission and the first symbol for synchronization broadcast signal block (SSB) transmission is less than/lower than NTX-RX*Tc, the HD-FDD UE does not transmit the PUSCH or PUCCH or PRACH, that is, the HD-FDD UE determines that a slot in which the PUSCH or PUCCH or PRACH is located is an available slot or the slot is included in K slots for PUSCH or PUCCH or PRACH transmission.
2) When AvailableSlotCounting is not started/enabled, for the repetition count K=1 or K>1, when the interval between the first symbol for PUSCH or PUCCH or PRACH repetition transmission and the last symbol for SSB transmission is less than/lower than NRX-TX*Tc, and/or when the interval between the last symbol for PUSCH or PUCCH or PRACH repetition transmission and the first symbol for synchronization broadcast signal block (SSB) transmission is less than/lower than NTX-RX*Tc, the HD-FDD UE does not transmit the PUSCH or PUCCH or PRACH, that is, the HD-FDD UE determines that a slot in which the PUSCH or PUCCH or PRACH is located is an available slot or the slot is included in K slots for PUSCH or PUCCH or PRACH transmission.

The transmission method provided in this embodiment of this application implements joint operation of the half-duplex RedCap terminal and the uplink coverage enhancement mechanism based on AvailableSlotCounting, and particularly provides the terminal behavior to be performed when the uplink-downlink switching time of resources between PUSCH repetition type A and SSB is insufficient. The half-duplex RedCap terminal supports uplink repetition transmission based on AvailableSlotCounting to guarantee uplink coverage. Through unified processing of dynamically scheduled and grant scheduled uplink transmission, unified processing of uplink transmission and downlink transmission in a case of overlapping resources or insufficient switching time, and unified processing for the repetition count K=1 or K>1, the behavior and complexity of the terminal can be simplified.

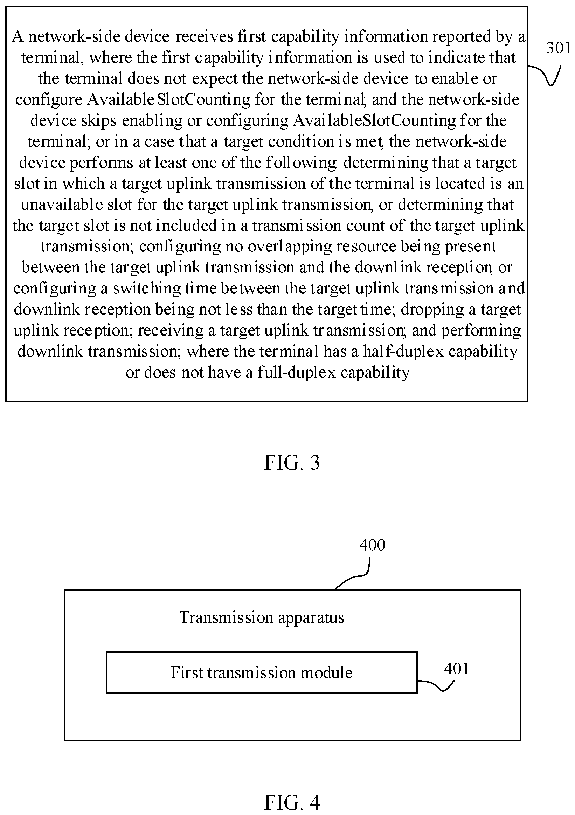

FIG. 3 is a second schematic flowchart of a transmission method according to an embodiment of this application. As shown in FIG. 3, the method includes the following step.

Step 301: A network-side device receives first capability information reported by a terminal, where the first capability information is used to indicate that the terminal does not expect the network-side device to enable or configure AvailableSlotCounting for the terminal; and the network-side device skips enabling or configuring AvailableSlotCounting for the terminal; or
in a case that a target condition is met, the network-side device performs at least one of the following:
determining that a target slot in which a target uplink transmission of the terminal is located is an unavailable slot for the target uplink transmission, or determining that the target slot is not included in a transmission count of the target uplink transmission;
configuring no overlapping resource being present between the target uplink transmission and the downlink reception, or configuring a switching time between the target uplink transmission and downlink reception being not less than the target time;
   dropping a target uplink reception;
   receiving a target uplink transmission; and
   performing downlink transmission; where
the terminal has a half-duplex capability or does not have a full-duplex capability.

It should be noted that this embodiment of this application can be applied to an uplink transmission scenario for a terminal with a half-duplex capability or with no full-duplex capability. The terminal includes a reduced-capability terminal (RedCap UE), such as a RedCap half-duplex (Half Duplex- frequency-division duplex, HD-FDD) UE. The network-side device includes, but is not limited to, the types of the network-side device 12 listed above, which is not specifically limited in this application.

Actually, the first capability information is used to indicate that the terminal does not expect the network-side device to enable or configure AvailableSlotCounting for the terminal. The first capability information may include at least one of the following: 1) having a half-duplex capability; and 2) having no full-duplex capability. In a case that the terminal reports the first capability information to the network-side device, the terminal does not expect the network-side device to enable AvailableSlotCounting (AvailableSlotCounting) for the terminal. The network-side device receives the first capability information reported by the terminal, and the network-side device does not enable or configure AvailableSlotCounting for the terminal.

A terminal with a half-duplex capability or a terminal with no full-duplex capability (such as a RedCap HD-FDD UE) does not support a mechanism with an uplink repetition count (such as PUSCH repetition Type A or PUCCH) being based on AvailableSlotCounting. For example, when the terminal reports to the network-side device that the terminal is a half-duplex terminal, assuming that the terminal reports RedCap UE with Half-duplex FDD operation type A (operation type A), the terminal does not expect the network-side device to configure or enable AvailableSlotCounting for the terminal.

Optionally, the target condition includes at least one of the following:
AvailableSlotCounting is enabled, or AvailableSlotCounting is not enabled;
an overlapping resource is present between the target uplink transmission and the downlink reception;
an overlapping resource is not present between the target uplink transmission and the downlink reception, and a switching time between the target uplink transmission and downlink reception is less than the target time;
the transmission count is greater than 1, or the transmission count is equal to 1; and
the target uplink transmission is a radio resource control RRC semi-statically configured uplink transmission; or the target uplink transmission is a dynamically scheduled uplink transmission.

Optionally, the switching time between the target uplink transmission and the downlink reception includes at least one of the following:
a time interval between the last symbol for the target uplink transmission and the first symbol for the downlink reception; and
a time interval between the last symbol for the downlink reception and the first symbol for the target uplink transmission.

Optionally, the RRC semi-statically configured uplink transmission includes at least one of the following:
RRC semi-statically configured physical uplink control channel PUCCH transmission;
RRC semi-statically configured configured grant PUSCH type 1 CG PUSCH Type 1;
RRC semi-statically configured configured grant PUSCH type 2 CG PUSCH Type2;
remaining CG PUSCH Type 2 other than the first CG PUSCH after CG PUSCH Type2 activated by downlink control information DCI; and
physical random access channel PRACH transmission.

Optionally, the dynamically scheduled uplink transmission includes at least one of the following:
PUSCH scheduled by an uplink grant UL grant;
the first CG PUSCH after CG PUSCH Type 2 activated by DCI;
PUSCH scheduled by a random access response RAR UL grant;
PUSCH scheduled by DCI format 0_0 scrambled by temporary cell radio network temporary identifier TC-RNTI;
dynamically scheduled PUCCH;
dynamically scheduled PRACH; and
dynamically scheduled sounding reference signal SRS.

Optionally, the downlink reception includes at least one of the following:
synchronization signal/physical broadcast channel block SSB;
at least one of type 0 common search space Type0 CSS, TypeOA CSS, Type1 CSS, and Type2 CSS; and
downlink search space SS associated with control resource set #0 CORESET #0.

Optionally, the SSB includes at least one of the following:
SSB configured by synchronization broadcast block position in burst ssb-PositionsInBurst;
SSB configured by nonCellDefiningSSB (nonCellDefiningSSB) related signaling;
SSB configured by dedicated downlink bandwidth part BWP-DownlinkDedicated signaling;
SSB configured by terminal-specific signaling UE-specific signaling; and
SSB contained in a current active BWP of the terminal.

According to the transmission method provided in this embodiment of this application, the network-side device receives the first capability information reported by the terminal, where the first capability information is used to indicate that the terminal does not expect the network-side device to enable or configure AvailableSlotCounting for the terminal, and skips enabling or configuring AvailableSlotCounting for the terminal based on the first capability information; or in a case that the target condition is met, performs at least one of the following: determining that a target slot in which a target uplink transmission of the terminal is located is an unavailable slot for the target uplink transmission, or determining that the target slot is not included in a transmission count of the target uplink transmission; configuring no overlapping resource being present between the target uplink transmission and the downlink reception, or configuring a switching time between the target uplink transmission and downlink reception being not less than the target time; dropping a target uplink reception; receiving a target uplink transmission; and performing downlink transmission; where the terminal has a half-duplex capability or does not have a full-duplex capability. In the transmission method provided in this embodiment of this application, unified processing can be implemented in a case that an overlapping resource is present between the target uplink transmission and the downlink reception or that the switching time between the target uplink transmission and the downlink reception is insufficient, thus simplifying the behavior and complexity of the terminal. The target slot in which the target uplink transmission of the terminal is located is determined to be an unavailable slot for the target uplink transmission, or the target slot is determined to be not included in the transmission count of the target uplink transmission, and therefore the target uplink transmission can be transmitted in the next available slot. In this way, uplink coverage can be improved.

For the transmission method provided in the embodiments of this application, the execution subject can be a transmission apparatus. In the embodiments of this application, the transmission method being performed by the transmission apparatus is used as an example to describe the transmission apparatus provided in the embodiments of this application.

FIG. 4 is a first schematic structural diagram of a transmission apparatus according to an embodiment of this application. As shown in FIG. 4, the transmission apparatus 400 is applied to a terminal, and includes:
a first transmission module 401, configured to report first capability information to a network-side device; where the first capability information is used to indicate that the terminal does not expect the network-side device to enable or configure AvailableSlotCounting for the terminal; or
in a case that a target condition is met, perform at least one of the following:
   determining that a target slot in which a target uplink transmission of the terminal is located is an unavailable slot for the target uplink transmission, or determining that the target slot is not included in a transmission count of the target uplink transmission;
   not expecting resource overlapping between the target uplink transmission and downlink reception, or not expecting that a switching time between the target uplink transmission and downlink reception to be less than a target time;
   dropping the target uplink transmission; and
   performing downlink reception; where
   the terminal has a half-duplex capability or does not have a full-duplex capability.

In a case that the transmission apparatus provided in this embodiment of this application reports the first capability information to the network-side device, the terminal does not expect the network-side device to enable or configure AvailableSlotCounting for the terminal; or in a case that the target condition is met, performs at least one of the following: determining that a target slot in which a target uplink transmission of the terminal with a half-duplex capability or without a full-duplex capability is located is an unavailable slot for the target uplink transmission, or determining that the target slot is not included in the transmission count of the target uplink transmission; not expecting resource overlapping between the target uplink transmission and downlink reception, or not expecting that a switching time between the target uplink transmission and downlink reception to be less than a target time; dropping the target uplink transmission; and performing downlink reception. The transmission apparatus provided in this embodiment of this application can implement unified processing in a case that an overlapping resource is present between the target uplink transmission and the downlink reception or that the switching time between the target uplink transmission and the downlink reception is insufficient, thus simplifying the behavior and complexity of the terminal. The target slot in which the target uplink transmission of the terminal is located is determined to be an unavailable slot for the target uplink transmission, or the target slot is determined to be not included in the transmission count of the target uplink transmission, and therefore the target uplink transmission can be transmitted in the next available slot. In this way, uplink coverage can be improved.

Optionally, the target condition includes at least one of the following:
AvailableSlotCounting is enabled, or AvailableSlotCounting is not enabled;
an overlapping resource is present between the target uplink transmission and the downlink reception;
an overlapping resource is not present between the target uplink transmission and the downlink reception, and a switching time between the target uplink transmission and downlink reception is less than the target time;
the transmission count is greater than 1, or the transmission count is equal to 1; and
the target uplink transmission is a radio resource control RRC semi-statically configured uplink transmission; or the target uplink transmission is a dynamically scheduled uplink transmission.

Optionally, the switching time between the target uplink transmission and the downlink reception includes at least one of the following:
a time interval between the last symbol for the target uplink transmission and the first symbol for the downlink reception; and
a time interval between the last symbol for the downlink reception and the first symbol for the target uplink transmission.

Optionally, the RRC semi-statically configured uplink transmission includes at least one of the following:
RRC semi-statically configured physical uplink control channel PUCCH transmission;
RRC semi-statically configured configured grant PUSCH type 1 CG PUSCH Type1;
RRC semi-statically configured configured grant PUSCH type 2 CG PUSCH Type2;
remaining CG PUSCH Type 2 other than the first CG PUSCH after CG PUSCH Type2 activated by downlink control information DCI; and
physical random access channel PRACH transmission.

Optionally, the dynamically scheduled uplink transmission includes at least one of the following:
PUSCH scheduled by an uplink grant UL grant;
the first CG PUSCH after CG PUSCH Type 2 activated by DCI;
PUSCH scheduled by a random access response RAR UL grant;
PUSCH scheduled by DCI format 0_0 scrambled by temporary cell radio network temporary identifier TC-RNTI;
dynamically scheduled PUCCH;
dynamically scheduled PRACH; and
dynamically scheduled sounding reference signal SRS.

Optionally, the first transmission module 401 is further configured to:
in a case with the transmission count K being equal to 1 or greater than 1, when an interval between the first symbol for the target uplink transmission and the last symbol for the downlink reception is less than a first threshold, and/or an interval between the last symbol for the target uplink transmission and the first symbol for the downlink reception is less than a second threshold, determine that the target slot in which the target uplink transmission of the terminal is located is an unavailable slot for the target uplink transmission, or determine that the target slot is not included in the transmission count of the target uplink transmission; or
in a case with AvailableSlotCounting being started or enabled and the transmission count K being equal to 1 or greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determine that the target slot in which the target uplink transmission of the terminal is located is an unavailable slot for the target uplink transmission, or determine that the target slot is not included in the transmission count of the target uplink transmission; or
in a case with AvailableSlotCounting being started or enabled and the transmission count K being greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determine that the target slot in which the target uplink transmission of the terminal is located is an unavailable slot for the target uplink transmission, or determine that the target slot is not included in the transmission count of the target uplink transmission.

Optionally, the first transmission module 401 is further configured to:
in a case with the transmission count K being equal to 1 or greater than 1, when an interval between the first symbol for the target uplink transmission and the last symbol for the downlink reception is less than a first threshold, and/or an interval between the last symbol for the target uplink transmission and the first symbol for the downlink reception is less than a second threshold, determine that the target slot in which the target uplink transmission of the terminal is located is an available slot for the target uplink transmission, or determine that the target slot is included in the transmission count of the target uplink transmission; or
in a case with the transmission count K being equal to 1 or greater than 1, not expect the interval between the first symbol for the target uplink transmission and the last symbol for the downlink reception to be less than the first threshold, and/or not expect the interval between the last symbol for the target uplink transmission and the first symbol for the downlink reception to be less than the second threshold; or
in a case with the transmission count K being equal to 1 or greater than 1, when the interval between the first symbol for the target uplink transmission and the last symbol for the downlink reception is less than the first threshold, and/or the interval between the last symbol for the target uplink transmission and the first symbol for the downlink reception is less than the second threshold, drop the target uplink transmission; or
in a case with AvailableSlotCounting being not started or not enabled and the transmission count K being equal to 1 or greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determine that the target slot in which the target uplink transmission of the terminal is located is an available slot for the target uplink transmission, or determine that the target slot is included in the transmission count of the target uplink transmission; or
in a case with AvailableSlotCounting being not started or not enabled and the transmission count K being equal to 1 or greater than 1, not expect the interval between the first symbol for the target uplink transmission and the last symbol for the downlink reception to be less than the first threshold, and/or not expect the interval between the last symbol for the target uplink transmission and the first symbol for the downlink reception to be less than the second threshold; or
in a case with AvailableSlotCounting being not started or not enabled and the transmission count K being equal to 1 or greater than 1, when the interval between the first symbol for the target uplink transmission and the last symbol for the downlink reception is less than the first threshold, and/or the interval between the last symbol for the target uplink transmission and the first symbol for the downlink reception is less than the second threshold, drop the target uplink transmission; or
in a case with AvailableSlotCounting being started or enabled and the transmission count K being equal to 1 or greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determine that the target slot in which the target uplink transmission of the terminal is located is an available slot for the target uplink transmission, or determine that the target slot is included in the transmission count of the target uplink transmission; or
in a case with AvailableSlotCounting being started or enabled and the transmission count K being equal to 1, when an interval between the first symbol for the target uplink transmission and the last symbol for the downlink reception is less than the first threshold, and/or an interval between the last symbol for the target uplink transmission and the first symbol for the downlink reception is less than the second threshold, determine that the target slot in which the target uplink transmission of the terminal is located is an available slot for the target uplink transmission, or determine that the target slot is included in the transmission count of the target uplink transmission; or
in a case with AvailableSlotCounting being started or enabled and the transmission count K being equal to 1, not expect the interval between the first symbol for the target uplink transmission and the last symbol for the downlink reception to be less than the first threshold, and/or not expect the interval between the last symbol for the target uplink transmission and the first symbol for the downlink reception to be less than the second threshold; or
in a case with AvailableSlotCounting being started or enabled and the transmission count K being greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determine that the target slot in which the target uplink transmission of the terminal is located is an available slot for the target uplink transmission, or determine that the target slot is included in the transmission count of the target uplink transmission.

Optionally, the downlink reception includes at least one of the following:
synchronization signal/physical broadcast channel block SSB;
at least one of type 0 common search space Type0 CSS, TypeOA CSS, Type1 CSS, and Type2 CSS; and
downlink search space SS associated with control resource set #0 CORESET #0.

Optionally, the SSB includes at least one of the following:
SSB configured by synchronization broadcast block position in burst ssb-PositionsInBurst;
SSB configured by nonCellDefiningSSB (nonCellDefiningSSB) related signaling;
SSB configured by dedicated downlink bandwidth part BWP-DownlinkDedicated signaling;
SSB configured by terminal-specific signaling UE-specific signaling; and
SSB contained in a current active BWP of the terminal.

Optionally, the first capability information includes at least one of the following:
having a half-duplex capability; and
having no full-duplex capability.

Optionally, the terminal includes a reduced-capability terminal RedCap UE.

The transmission apparatus in this embodiment of the application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiment of this application.

The transmission apparatus provided in this embodiment of this application is capable of implementing the processes implemented in the method embodiments shown in FIG. 2, with the same technical effects achieved. To avoid repetition, details are not described herein again.

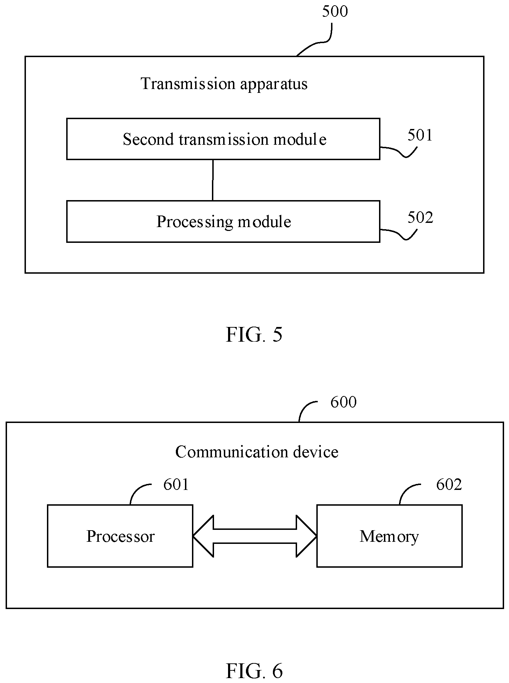

FIG. 5 is a second schematic structural diagram of a transmission apparatus according to an embodiment of this application. As shown in FIG. 5, the transmission apparatus 500 is applied to a network-side device and includes:
a second transmission module 501, configured to receive first capability information reported by a terminal, where the first capability information is used to indicate that the terminal does not expect a network-side device to enable or configure AvailableSlotCounting for the terminal; and a processing module 502, configured to skip enabling or configuring AvailableSlotCounting for the terminal; or
the second transmission module 501 is configured to: in a case that a target condition is met, perform at least one of the following:
   determining that a target slot in which a target uplink transmission of the terminal is located is an unavailable slot for the target uplink transmission, or determining that the target slot is not included in a transmission count of the target uplink transmission;
   configuring no overlapping resource being present between the target uplink transmission and the downlink reception, or configuring a switching time between the target uplink transmission and downlink reception being not less than the target time;
      dropping a target uplink reception;
      receiving a target uplink transmission; and
      performing downlink transmission; where
      the terminal has a half-duplex capability or does not have a full-duplex capability.

The transmission apparatus provided in this embodiment of this application receives the first capability information reported by the terminal, where the first capability information is used to indicate that the terminal does not expect the network-side device to enable or configure AvailableSlotCounting for the terminal, and skips enabling or configuring AvailableSlotCounting for the terminal based on the first capability information; or in a case that the target condition is met, performs at least one of the following: determining that a target slot in which a target uplink transmission of the terminal is located is an unavailable slot for the target uplink transmission, or determining that the target slot is not included in a transmission count of the target uplink transmission; configuring no overlapping resource being present between the target uplink transmission and the downlink reception, or configuring a switching time between the target uplink transmission and downlink reception being not less than the target time; dropping a target uplink reception; receiving a target uplink transmission; and performing downlink transmission; where the terminal has a half-duplex capability or does not have a full-duplex capability. The transmission apparatus provided in this embodiment of this application can implement unified processing in a case that an overlapping resource is present between the target uplink transmission and the downlink reception or that the switching time between the target uplink transmission and the downlink reception is insufficient, thus simplifying the behavior and complexity of the terminal. The target slot in which the target uplink transmission of the terminal is located is determined to be an unavailable slot for the target uplink transmission, or the target slot is determined to be not included in the transmission count of the target uplink transmission, and therefore the target uplink transmission can be transmitted in the next available slot. In this way, uplink coverage can be improved.

Optionally, the target condition includes at least one of the following:
AvailableSlotCounting is enabled, or AvailableSlotCounting is not enabled;
an overlapping resource is present between the target uplink transmission and the downlink reception;
an overlapping resource is not present between the target uplink transmission and the downlink reception, and a switching time between the target uplink transmission and downlink reception is less than the target time;
the transmission count is greater than 1, or the transmission count is equal to 1; and
the target uplink transmission is a radio resource control RRC semi-statically configured uplink transmission; or the target uplink transmission is a dynamically scheduled uplink transmission.

Optionally, the switching time between the target uplink transmission and the downlink reception includes at least one of the following:
a time interval between the last symbol for the target uplink transmission and the first symbol for the downlink reception; and
a time interval between the last symbol for the downlink reception and the first symbol for the target uplink transmission.

Optionally, the RRC semi-statically configured uplink transmission includes at least one of the following:
RRC semi-statically configured physical uplink control channel PUCCH transmission;
RRC semi-statically configured configured grant PUSCH type 1 CG PUSCH Type 1;
RRC semi-statically configured configured grant PUSCH type 2 CG PUSCH Type2;
remaining CG PUSCH Type 2 other than the first CG PUSCH after CG PUSCH Type2 activated by downlink control information DCI; and
physical random access channel PRACH transmission.

Optionally, the dynamically scheduled uplink transmission includes at least one of the following:
PUSCH scheduled by an uplink grant UL grant;
the first CG PUSCH after CG PUSCH Type 2 activated by DCI;
PUSCH scheduled by a random access response RAR UL grant;
PUSCH scheduled by DCI format 0_0 scrambled by temporary cell radio network temporary identifier TC-RNTI;
dynamically scheduled PUCCH;
dynamically scheduled PRACH; and
dynamically scheduled sounding reference signal SRS.

Optionally, the second transmission module 501 is further configured to:
in a case with the transmission count K being equal to 1 or greater than 1, when an interval between the first symbol for the target uplink transmission and the last symbol for the downlink reception is less than a first threshold, and/or an interval between the last symbol for the target uplink transmission and the first symbol for the downlink reception is less than a second threshold, determine that the target slot in which the target uplink transmission of the terminal is located is an unavailable slot for the target uplink transmission, or determine that the target slot is not included in the transmission count of the target uplink transmission; or
in a case with AvailableSlotCounting being started or enabled and the transmission count K being equal to 1 or greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determine that the target slot in which the target uplink transmission of the terminal is located is an unavailable slot for the target uplink transmission, or determine that the target slot is not included in the transmission count of the target uplink transmission; or
in a case with AvailableSlotCounting being started or enabled and the transmission count K being greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determine that the target slot in which the target uplink transmission of the terminal is located is an unavailable slot for the target uplink transmission, or determine that the target slot is not included in the transmission count of the target uplink transmission.

Optionally, the second transmission module 501 is further configured to:
in a case with the transmission count K being equal to 1 or greater than 1, when an interval between the first symbol for the target uplink transmission and the last symbol for the downlink reception is less than a first threshold, and/or an interval between the last symbol for the target uplink transmission and the first symbol for the downlink reception is less than a second threshold, determine that the target slot in which the target uplink transmission of the terminal is located is an available slot for the target uplink transmission, or determine that the target slot is included in the transmission count of the target uplink transmission; or
in a case with the transmission count K being equal to 1 or greater than 1, learn that the terminal does not expect the interval between the first symbol for the target uplink transmission and the last symbol for the downlink reception to be less than the first threshold, and/or learn that the terminal does not expect the interval between the last symbol for the target uplink transmission and the first symbol for the downlink reception to be less than the second threshold; or
in a case with the transmission count K being equal to 1 or greater than 1, when the interval between the first symbol for the target uplink transmission and the last symbol for the downlink reception is less than the first threshold, and/or the interval between the last symbol for the target uplink transmission and the first symbol for the downlink reception is less than the second threshold, drop the target uplink reception; or
in a case with AvailableSlotCounting being not started or not enabled and the transmission count K being equal to 1 or greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determine that the target slot in which the target uplink transmission of the terminal is located is an available slot for the target uplink transmission, or determine that the target slot is included in the transmission count of the target uplink transmission; or
in a case with AvailableSlotCounting being not started or not enabled and the transmission count K being equal to 1 or greater than 1, learn that the terminal does not expect the interval between the first symbol for the target uplink transmission and the last symbol for the downlink reception to be less than the first threshold, and/or learn that the terminal does not expect the interval between the last symbol for the target uplink transmission and the first symbol for the downlink reception to be less than the second threshold; or
in a case with AvailableSlotCounting being not started or not enabled and the transmission count K being equal to 1 or greater than 1, when the interval between the first symbol for the target uplink transmission and the last symbol for the downlink reception is less than the first threshold, and/or the interval between the last symbol for the target uplink transmission and the first symbol for the downlink reception is less than the second threshold, drop the target uplink reception; or
in a case with AvailableSlotCounting being started or enabled and the transmission count K being equal to 1 or greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determine that the target slot in which the target uplink transmission of the terminal is located is an available slot for the target uplink transmission, or determine that the target slot is included in the transmission count of the target uplink transmission; or
in a case with AvailableSlotCounting being started or enabled and the transmission count K being equal to 1, when an interval between the first symbol for the target uplink transmission and the last symbol for the downlink reception is less than the first threshold, and/or an interval between the last symbol for the target uplink transmission and the first symbol for the downlink reception is less than the second threshold, determine that the target slot in which the target uplink transmission of the terminal is located is an available slot for the target uplink transmission, or determine that the target slot is included in the transmission count of the target uplink transmission; or
in a case with AvailableSlotCounting being started or enabled and the transmission count K being equal to 1, learn that the terminal does not expect the interval between the first symbol for the target uplink transmission and the last symbol for the downlink reception to be less than the first threshold, and/or learn that the terminal does not expect the interval between the last symbol for the target uplink transmission and the first symbol for the downlink reception to be less than the second threshold; or
in a case with AvailableSlotCounting being started or enabled and the transmission count K being greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determine that the target slot in which the target uplink transmission of the terminal is located is an available slot for the target uplink transmission, or determine that the target slot is included in the transmission count of the target uplink transmission.

Optionally, the downlink reception includes at least one of the following:
synchronization signal/physical broadcast channel block SSB;
at least one of type 0 common search space Type0 CSS, TypeOA CSS, Type1 CSS, and Type2 CSS; and
downlink search space SS associated with control resource set #0 CORESET #0.

Optionally, the SSB includes at least one of the following:
SSB configured by synchronization broadcast block position in burst ssb-PositionsInBurst;
SSB configured by nonCellDefiningSSB (nonCellDefiningSSB) related signaling;
SSB configured by dedicated downlink bandwidth part BWP-DownlinkDedicated signaling;
SSB configured by terminal-specific signaling UE-specific signaling; and
SSB contained in a current active BWP of the terminal.

Optionally, the first capability information includes at least one of the following:
having a half-duplex capability; and
having no full-duplex capability.

Optionally, the terminal includes a reduced-capability terminal RedCap UE.

FIG. 6 is a schematic structural diagram of a communication device according to an embodiment of this application. As shown in FIG. 6, the communication device 600 includes a processor 601, a memory 602, and a program or instructions stored in the memory 602 and capable of running on the processor 601. For example, when the communication device 600 is a terminal and when the program or the instructions are executed by the processor 601, the steps of the foregoing embodiments of the transmission method on the terminal side are implemented, with the same technical effects achieved. When the communication device 600 is a network-side device and when the program or the instructions are executed by the processor 601, the processes of the foregoing embodiment of the transmission method on the network-side device side are implemented, with the same technical effects achieved. To avoid repetition, details are not described herein again.

An embodiment of this application further provides a terminal, including a processor and a communication interface.

The communication interface is configured to report first capability information to a network-side device; where the first capability information is used to indicate that the terminal does not expect the network-side device to enable or configure AvailableSlotCounting for the terminal; or
the processor is configured to: in a case that a target condition is met, perform at least one of the following:
determining that a target slot in which a target uplink transmission of the terminal is located is an unavailable slot for the target uplink transmission, or determining that the target slot is not included in a transmission count of the target uplink transmission;
not expecting resource overlapping between the target uplink transmission and downlink reception, or not expecting that a switching time between the target uplink transmission and downlink reception to be less than a target time;
   dropping the target uplink transmission; and
   performing downlink reception; where
   the terminal has a half-duplex capability or does not have a full-duplex capability.

The terminal embodiments correspond to the foregoing terminal-side method embodiments, and the implementation processes and implementations of the foregoing method embodiments can be applied to the terminal embodiments, with the same technical effects achieved.

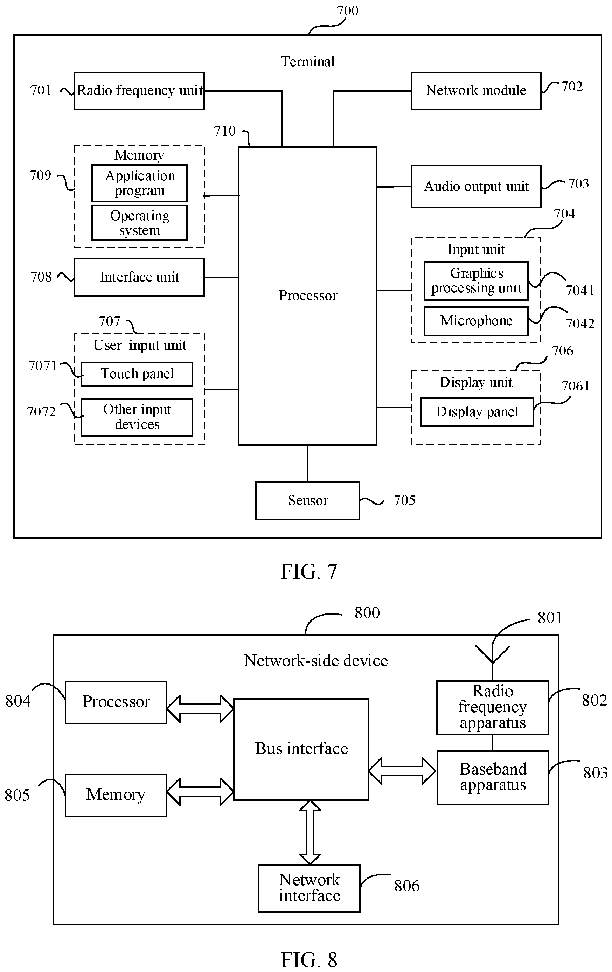

FIG. 7 is a schematic structural diagram of a terminal according to an embodiment of this application. As shown in FIG. 7, the terminal 700 includes but is not limited to at least part of components such as a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, a battery) supplying power to the components, and the power supply may be logically connected to the processor 710 through a power management system. In this way, functions such as charge management, discharge management, and power consumption management are implemented by using the power management system. The structure of the terminal shown in FIG. 7 does not constitute any limitation on the terminal. The terminal may include more or fewer components than shown in the figure, or a combination of some components, or the components disposed differently. Details are not described herein again.

It can be understood that in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, and the like. The user input unit 707 may include at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or a power on/off key), a trackball, a mouse, a joystick, and the like. Details are not described herein.

In this embodiment of this application, the radio frequency unit 701 receives downlink data from a network-side device, and then sends the downlink data to the processor 710 for processing. In addition, the radio frequency unit 701 may send uplink data to the network-side device. Generally, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may include a first storage area for storing a program or instructions and a second storage area for storing data. The first storage area may store an operating system, an application program or instruction required by at least one function (for example, a sound playback function or an image playback function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 709 in the embodiments of this application includes but is not limited to these and any other suitable types of memories.

The processor 710 may include one or more processing units. Optionally, an application processor and a modem processor may be integrated in the processor 710. The application processor primarily processes operations involving an operating system, user interfaces, application programs, and the like. The modem processor primarily processes radio communication signals, for example, being a baseband processor. It can be understood that the modem processor may alternatively be not integrated in the processor 710.

The radio frequency unit 701 is configured to report first capability information to a network-side device; where the first capability information is used to indicate that the terminal does not expect the network-side device to enable or configure AvailableSlotCounting for the terminal; or
the processor 710 is configured to: in a case that a target condition is met, perform at least one of the following:
determining that a target slot in which a target uplink transmission of the terminal is located is an unavailable slot for the target uplink transmission, or determining that the target slot is not included in a transmission count of the target uplink transmission;
not expecting resource overlapping between the target uplink transmission and downlink reception, or not expecting that a switching time between the target uplink transmission and downlink reception to be less than a target time;
   dropping the target uplink transmission; and
   performing downlink reception; where
   the terminal has a half-duplex capability or does not have a full-duplex capability.

In a case that the terminal provided in this embodiment of this application reports the first capability information to the network-side device, the terminal does not expect the network-side device to enable or configure AvailableSlotCounting for the terminal; or in a case that the target condition is met, the terminal with a half-duplex capability or without a full-duplex capability performs at least one of the following: determining that a target slot in which a target uplink transmission is located is an unavailable slot for the target uplink transmission, or determining that the target slot is not included in the transmission count of the target uplink transmission; not expecting resource overlapping between the target uplink transmission and downlink reception, or not expecting that a switching time between the target uplink transmission and downlink reception to be less than a target time; dropping the target uplink transmission; and performing downlink reception. The terminal provided in this embodiment of this application can implement unified processing in a case that an overlapping resource is present between the target uplink transmission and the downlink reception or that the switching time between the target uplink transmission and the downlink reception is insufficient, thus simplifying the behavior and complexity of the terminal. The target slot in which the target uplink transmission of the terminal is located is determined to be an unavailable slot for the target uplink transmission, or the target slot is determined to be not included in the transmission count of the target uplink transmission, and therefore the target uplink transmission can be transmitted in the next available slot. In this way, uplink coverage can be improved.

Optionally, the target condition includes at least one of the following:
AvailableSlotCounting is enabled, or AvailableSlotCounting is not enabled;
an overlapping resource is present between the target uplink transmission and the downlink reception;
an overlapping resource is not present between the target uplink transmission and the downlink reception, and a switching time between the target uplink transmission and downlink reception is less than the target time;
the transmission count is greater than 1, or the transmission count is equal to 1; and
the target uplink transmission is a radio resource control RRC semi-statically configured uplink transmission; or the target uplink transmission is a dynamically scheduled uplink transmission.

Optionally, the switching time between the target uplink transmission and the downlink reception includes at least one of the following:
a time interval between the last symbol for the target uplink transmission and the first symbol for the downlink reception; and
a time interval between the last symbol for the downlink reception and the first symbol for the target uplink transmission.

Optionally, the RRC semi-statically configured uplink transmission includes at least one of the following:
RRC semi-statically configured physical uplink control channel PUCCH transmission;
RRC semi-statically configured configured grant PUSCH type 1 CG PUSCH Type 1;
RRC semi-statically configured configured grant PUSCH type 2 CG PUSCH Type2;
remaining CG PUSCH Type 2 other than the first CG PUSCH after CG PUSCH Type2 activated by downlink control information DCI; and
physical random access channel PRACH transmission.

Optionally, the dynamically scheduled uplink transmission includes at least one of the following:
PUSCH scheduled by an uplink grant UL grant;
the first CG PUSCH after CG PUSCH Type 2 activated by DCI;
PUSCH scheduled by a random access response RAR UL grant;
PUSCH scheduled by DCI format 0_0 scrambled by temporary cell radio network temporary identifier TC-RNTI;
dynamically scheduled PUCCH;
dynamically scheduled PRACH; and
dynamically scheduled sounding reference signal SRS.

Optionally, the processor 710 is further configured to:
in a case with the transmission count K being equal to 1 or greater than 1, when an interval between the first symbol for the target uplink transmission and the last symbol for the downlink reception is less than a first threshold, and/or an interval between the last symbol for the target uplink transmission and the first symbol for the downlink reception is less than a second threshold, determine that the target slot in which the target uplink transmission of the terminal is located is an unavailable slot for the target uplink transmission, or determine that the target slot is not included in the transmission count of the target uplink transmission; or
in a case with AvailableSlotCounting being started or enabled and the transmission count K being equal to 1 or greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determine that the target slot in which the target uplink transmission of the terminal is located is an unavailable slot for the target uplink transmission, or determine that the target slot is not included in the transmission count of the target uplink transmission; or
in a case with AvailableSlotCounting being started or enabled and the transmission count K being greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determine that the target slot in which the target uplink transmission of the terminal is located is an unavailable slot for the target uplink transmission, or determine that the target slot is not included in the transmission count of the target uplink transmission.

Optionally, the processor 710 is further configured to:
in a case with the transmission count K being equal to 1 or greater than 1, when an interval between the first symbol for the target uplink transmission and the last symbol for the downlink reception is less than a first threshold, and/or an interval between the last symbol for the target uplink transmission and the first symbol for the downlink reception is less than a second threshold, determine that the target slot in which the target uplink transmission of the terminal is located is an available slot for the target uplink transmission, or determine that the target slot is included in the transmission count of the target uplink transmission; or
in a case with the transmission count K being equal to 1 or greater than 1, not expect the interval between the first symbol for the target uplink transmission and the last symbol for the downlink reception to be less than the first threshold, and/or not expect the interval between the last symbol for the target uplink transmission and the first symbol for the downlink reception to be less than the second threshold; or
in a case with the transmission count K being equal to 1 or greater than 1, when the interval between the first symbol for the target uplink transmission and the last symbol for the downlink reception is less than the first threshold, and/or the interval between the last symbol for the target uplink transmission and the first symbol for the downlink reception is less than the second threshold, drop the target uplink transmission; or
in a case with AvailableSlotCounting being not started or not enabled and the transmission count K being equal to 1 or greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determine that the target slot in which the target uplink transmission of the terminal is located is an available slot for the target uplink transmission, or determine that the target slot is included in the transmission count of the target uplink transmission; or
in a case with AvailableSlotCounting being not started or not enabled and the transmission count K being equal to 1 or greater than 1, not expect the interval between the first symbol for the target uplink transmission and the last symbol for the downlink reception to be less than the first threshold, and/or not expect the interval between the last symbol for the target uplink transmission and the first symbol for the downlink reception to be less than the second threshold; or
in a case with AvailableSlotCounting being not started or not enabled and the transmission count K being equal to 1 or greater than 1, when the interval between the first symbol for the target uplink transmission and the last symbol for the downlink reception is less than the first threshold, and/or the interval between the last symbol for the target uplink transmission and the first symbol for the downlink reception is less than the second threshold, drop the target uplink transmission; or
in a case with AvailableSlotCounting being started or enabled and the transmission count K being equal to 1 or greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determine that the target slot in which the target uplink transmission of the terminal is located is an available slot for the target uplink transmission, or determine that the target slot is included in the transmission count of the target uplink transmission; or
in a case with AvailableSlotCounting being started or enabled and the transmission count K being equal to 1, when an interval between the first symbol for the target uplink transmission and the last symbol for the downlink reception is less than the first threshold, and/or an interval between the last symbol for the target uplink transmission and the first symbol for the downlink reception is less than the second threshold, determine that the target slot in which the target uplink transmission of the terminal is located is an available slot for the target uplink transmission, or determine that the target slot is included in the transmission count of the target uplink transmission; or
in a case with AvailableSlotCounting being started or enabled and the transmission count K being equal to 1, not expect the interval between the first symbol for the target uplink transmission and the last symbol for the downlink reception to be less than the first threshold, and/or not expect the interval between the last symbol for the target uplink transmission and the first symbol for the downlink reception to be less than the second threshold; or
in a case with AvailableSlotCounting being started or enabled and the transmission count K being greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determine that the target slot in which the target uplink transmission of the terminal is located is an available slot for the target uplink transmission, or determine that the target slot is included in the transmission count of the target uplink transmission.

Optionally, the downlink reception includes at least one of the following:
synchronization signal/physical broadcast channel block SSB;
at least one of type 0 common search space Type0 CSS, Type0A CSS, Type1 CSS, and Type2 CSS; and
downlink search space SS associated with control resource set #0 CORESET #0.

Optionally, the SSB includes at least one of the following:
SSB configured by synchronization broadcast block position in burst ssb-PositionsInBurst;
SSB configured by nonCellDefiningSSB (nonCellDefiningSSB) related signaling;
SSB configured by dedicated downlink bandwidth part BWP-DownlinkDedicated signaling;
SSB configured by terminal-specific signaling UE-specific signaling; and
SSB contained in a current active BWP of the terminal.

Optionally, the first capability information includes at least one of the following:
having a half-duplex capability; and
having no full-duplex capability.

Optionally, the terminal includes a reduced-capability terminal RedCap UE.

An embodiment of this application further provides a network-side device, including a processor and a communication interface.

The communication interface is configured to receive first capability information reported by a terminal, where the first capability information is used to indicate that the terminal does not expect a network-side device to enable or configure AvailableSlotCounting for the terminal; and the processor is configured to skip enabling or configuring AvailableSlotCounting for the terminal; or
the processor is configured to: in a case that a target condition is met, perform at least one of the following:
determining that a target slot in which a target uplink transmission of the terminal is located is an unavailable slot for the target uplink transmission, or determining that the target slot is not included in a transmission count of the target uplink transmission;
configuring no overlapping resource being present between the target uplink transmission and the downlink reception, or configuring a switching time between the target uplink transmission and downlink reception being not less than the target time;
   dropping a target uplink reception;
   receiving a target uplink transmission; and
   performing downlink transmission; where
   the terminal has a half-duplex capability or does not have a full-duplex capability.

The network-side device embodiments correspond to the foregoing network-side device method embodiments, and the implementation processes and implementations of the foregoing method embodiments can be applied to the network-side device embodiments, with the same technical effects achieved.

FIG. 8 is a schematic structural diagram of a network-side device according to an embodiment of this application. As shown in FIG. 8, the network-side device 800 includes an antenna 801, a radio frequency apparatus 802, a baseband apparatus 803, a processor 804, and a memory 805. The antenna 801 is connected to the radio frequency apparatus 802. In an uplink direction, the radio frequency apparatus 802 receives information by using the antenna 801, and sends the received information to the baseband apparatus 803 for processing. In a downlink direction, the baseband apparatus 803 processes to-be-sent information, and sends the information to the radio frequency apparatus 802; and the radio frequency apparatus 802 processes the received information and then sends the information out by using the antenna 801.

The method executed by the network-side device in the foregoing embodiments can be implemented in the baseband apparatus 803, and the baseband apparatus 803 includes a baseband processor.

The baseband apparatus 803 may include, for example, at least one baseband board, where a plurality of chips are disposed on the baseband board. As shown in FIG. 8, one of the chips is, for example, a baseband processor, and is connected to the memory 805 through the bus interface, to invoke a program in the memory 805 to perform the operations of the network device shown in the foregoing method embodiments.

The network-side device may further include a network interface 806, where the interface is, for example, a common public radio interface (common public radio interface, CPRI).

Specifically, the network-side device 800 in this embodiment of the present invention further includes: instructions or a program stored in the memory 805 and capable of running on the processor 804. The processor 804 invokes the instructions or program in the memory 805 to execute the transmission method described above, with the same technical effects achieved. To avoid repetition, details are not repeated herein.

An embodiment of this application further provides a transmission system, including a terminal and a network-side device, where the terminal can be configured to execute the steps of the foregoing embodiments of the transmission method on the terminal side, and the network-side device can be configured to execute the steps of foregoing embodiments of the transmission method on the network-side device side.

An embodiment of this application further provides a readable storage medium. The readable storage medium may be volatile or non-volatile. A program or instructions are stored in the readable storage medium. When the program or the instructions are executed by a processor, the processes of the foregoing embodiment of the transmission method can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions to implement the processes of the foregoing transmission method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing transmission method embodiments, with the same technical effects achieved. To avoid repetition, details are not repeated herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A transmission method, comprising:
reporting, by a terminal, first capability information to a network-side device; wherein the first capability information is used to indicate that the terminal does not expect the network-side device to enable or configure AvailableSlotCounting for the terminal; or
in a case that a target condition is met, performing, by the terminal, at least one of the following:
determining that a target slot in which a target uplink transmission of the terminal is located is an unavailable slot for the target uplink transmission, or determining that the target slot is not comprised in a transmission count of the target uplink transmission;
not expecting resource overlapping between the target uplink transmission and downlink reception, or not expecting that a switching time between the target uplink transmission and downlink reception to be less than a target time;
dropping the target uplink transmission; and
performing downlink reception; wherein
the terminal has a half-duplex capability or does not have a full-duplex capability.

2. The transmission method according to claim 1, wherein the target condition comprises at least one of the following:
AvailableSlotCounting is enabled, or AvailableSlotCounting is not enabled;
an overlapping resource is present between the target uplink transmission and the downlink reception;
an overlapping resource is not present between the target uplink transmission and the downlink reception, and the switching time between the target uplink transmission and the downlink reception is less than the target time;
the transmission count is greater than 1, or the transmission count is equal to 1; and
the target uplink transmission is a radio resource control RRC semi-statically configured uplink transmission; or the target uplink transmission is a dynamically scheduled uplink transmission.

3. The transmission method according to claim 2, wherein the switching time between the target uplink transmission and the downlink reception comprises at least one of the following:
a time interval between the last symbol for the target uplink transmission and the first symbol for the downlink reception; and
a time interval between the last symbol for the downlink reception and the first symbol for the target uplink transmission.

4. The transmission method according to claim 2 or 3, wherein the RRC semi-statically configured uplink transmission comprises at least one of the following:
RRC semi-statically configured physical uplink control channel PUCCH transmission;
RRC semi-statically configured configured grant PUSCH type 1 CG PUSCH Type 1 ;
RRC semi-statically configured configured grant PUSCH type 2 CG PUSCH Type2;
remaining CG PUSCH Type 2 other than the first CG PUSCH after CG PUSCH Type2 activated by downlink control information DCI; and
physical random access channel PRACH transmission.

5. The transmission method according to any one of claims 2 to 4, wherein the dynamically scheduled uplink transmission comprises at least one of the following:
PUSCH scheduled by an uplink grant UL grant;
the first CG PUSCH after CG PUSCH Type 2 activated by DCI;
PUSCH scheduled by a random access response RAR UL grant;
PUSCH scheduled by DCI format 0_0 scrambled by temporary cell radio network temporary identifier TC-RNTI;
dynamically scheduled PUCCH;
dynamically scheduled PRACH; and
dynamically scheduled sounding reference signal SRS.

6. The transmission method according to any one of claims 2 to 5, wherein the determining, by the terminal, that a target slot in which a target uplink transmission of the terminal is located is an unavailable slot for the target uplink transmission, or determining that the target slot is not comprised in a transmission count of the target uplink transmission, in a case that a target condition is met, comprises:
in a case with the transmission count K being equal to 1 or greater than 1, when an interval between the first symbol for the target uplink transmission and the last symbol for the downlink reception is less than a first threshold, and/or an interval between the last symbol for the target uplink transmission and the first symbol for the downlink reception is less than a second threshold, determining that the target slot in which the target uplink transmission of the terminal is located is an unavailable slot for the target uplink transmission, or determining that the target slot is not comprised in the transmission count of the target uplink transmission; or
in a case with AvailableSlotCounting being started or enabled and the transmission count K being equal to 1 or greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determining that the target slot in which the target uplink transmission of the terminal is located is an unavailable slot for the target uplink transmission, or determining that the target slot is not comprised in the transmission count of the target uplink transmission; or
in a case with AvailableSlotCounting being started or enabled and the transmission count K being greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determining that the target slot in which the target uplink transmission of the terminal is located is an unavailable slot for the target uplink transmission, or determining that the target slot is not comprised in the transmission count of the target uplink transmission.

7. The transmission method according to any one of claims 2 to 5, wherein the dropping, by the terminal, the target uplink transmission comprises:
in a case with the transmission count K being equal to 1 or greater than 1, when an interval between the first symbol for the target uplink transmission and the last symbol for the downlink reception is less than a first threshold, and/or an interval between the last symbol for the target uplink transmission and the first symbol for the downlink reception is less than a second threshold, determining that the target slot in which the target uplink transmission of the terminal is located is an available slot for the target uplink transmission, or determining that the target slot is comprised in the transmission count of the target uplink transmission; or
in a case with the transmission count K being equal to 1 or greater than 1, skipping expecting, by the terminal, the interval between the first symbol for the target uplink transmission and the last symbol for the downlink reception to be less than the first threshold, and/or skipping expecting, by the terminal, the interval between the last symbol for the target uplink transmission and the first symbol for the downlink reception to be less than the second threshold; or
in a case with the transmission count K being equal to 1 or greater than 1, when the interval between the first symbol for the target uplink transmission and the last symbol for the downlink reception is less than the first threshold, and/or the interval between the last symbol for the target uplink transmission and the first symbol for the downlink reception is less than the second threshold, dropping, by the terminal, the target uplink transmission; or
in a case with AvailableSlotCounting being not started or not enabled and the transmission count K being equal to 1 or greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determining that the target slot in which the target uplink transmission of the terminal is located is an available slot for the target uplink transmission, or determining that the target slot is comprised in the transmission count of the target uplink transmission; or
in a case with AvailableSlotCounting being not started or not enabled and the transmission count K being equal to 1 or greater than 1, skipping expecting, by the terminal, the interval between the first symbol for the target uplink transmission and the last symbol for the downlink reception to be less than the first threshold, and/or skipping expecting, by the terminal, the interval between the last symbol for the target uplink transmission and the first symbol for the downlink reception to be less than the second threshold; or
in a case with AvailableSlotCounting being not started or not enabled and the transmission count K being equal to 1 or greater than 1, when the interval between the first symbol for the target uplink transmission and the last symbol for the downlink reception is less than the first threshold, and/or the interval between the last symbol for the target uplink transmission and the first symbol for the downlink reception is less than the second threshold, dropping, by the terminal, the target uplink transmission; or
in a case with AvailableSlotCounting being started or enabled and the transmission count K being equal to 1 or greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determining that the target slot in which the target uplink transmission of the terminal is located is an available slot for the target uplink transmission, or determining that the target slot is comprised in the transmission count of the target uplink transmission; or
in a case with AvailableSlotCounting being started or enabled and the transmission count K being equal to 1, when an interval between the first symbol for the target uplink transmission and the last symbol for the downlink reception is less than the first threshold, and/or an interval between the last symbol for the target uplink transmission and the first symbol for the downlink reception is less than the second threshold, determining that the target slot in which the target uplink transmission of the terminal is located is an available slot for the target uplink transmission, or determining that the target slot is comprised in the transmission count of the target uplink transmission; or
in a case with AvailableSlotCounting being started or enabled and the transmission count K being equal to 1, skipping expecting, by the terminal, the interval between the first symbol for the target uplink transmission and the last symbol for the downlink reception to be less than the first threshold, and/or skipping expecting, by the terminal, the interval between the last symbol for the target uplink transmission and the first symbol for the downlink reception to be less than the second threshold; or
in a case with AvailableSlotCounting being started or enabled and the transmission count K being greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determining that the target slot in which the target uplink transmission of the terminal is located is an available slot for the target uplink transmission, or determining that the target slot is comprised in the transmission count of the target uplink transmission.

8. The transmission method according to any one of claims 1 to 7, wherein the downlink reception comprises at least one of the following:
synchronization signal/physical broadcast channel block SSB;
at least one of type 0 common search space Type0 CSS, Type0A CSS, Type1 CSS, and Type2 CSS; and
downlink search space SS associated with control resource set #0 CORESET #0.

9. The transmission method according to claim 8, wherein the SSB comprises at least one of the following:
SSB configured by synchronization broadcast block position in burst ssb-PositionsInBurst;
SSB configured by nonCellDefiningSSB nonCellDefiningSSB related signaling;
SSB configured by dedicated downlink bandwidth part BWP-DownlinkDedicated signaling;
SSB configured by terminal-specific signaling UE-specific signaling; and
SSB contained in a current active BWP of the terminal.

10. The transmission method according to any one of claims 1 to 9, wherein the first capability information comprises at least one of the following:
having a half-duplex capability; and
having no full-duplex capability.

11. The transmission method according to any one of claims 1 to 10, wherein the terminal comprises a reduced-capability terminal RedCap UE.

12. A transmission method, comprising:
receiving, by a network-side device, first capability information reported by a terminal, wherein the first capability information is used to indicate that the terminal does not expect the network-side device to enable or configure AvailableSlotCounting for the terminal; and skipping enabling or configuring, by the network-side device, AvailableSlotCounting for the terminal; or
in a case that a target condition is met, performing, by the network-side device, at least one of the following:
determining that a target slot in which a target uplink transmission of the terminal is located is an unavailable slot for the target uplink transmission, or determining that the target slot is not comprised in a transmission count of the target uplink transmission;
configuring no overlapping resource being present between the target uplink transmission and the downlink reception, or configuring a switching time between the target uplink transmission and downlink reception being not less than the target time;
dropping a target uplink reception;
receiving a target uplink transmission; and
performing downlink transmission; wherein
the terminal has a half-duplex capability or does not have a full-duplex capability.

13. The transmission method according to claim 12, wherein the target condition comprises at least one of the following:
AvailableSlotCounting is enabled, or AvailableSlotCounting is not enabled;
an overlapping resource is present between the target uplink transmission and the downlink reception;
an overlapping resource is not present between the target uplink transmission and the downlink reception, and the switching time between the target uplink transmission and the downlink reception is less than the target time;
the transmission count is greater than 1, or the transmission count is equal to 1; and
the target uplink transmission is a radio resource control RRC semi-statically configured uplink transmission; or the target uplink transmission is a dynamically scheduled uplink transmission.

14. The transmission method according to claim 13, wherein the switching time between the target uplink transmission and the downlink reception comprises at least one of the following:
a time interval between the last symbol for the target uplink transmission and the first symbol for the downlink reception; and
a time interval between the last symbol for the downlink reception and the first symbol for the target uplink transmission.

15. The transmission method according to claim 13 or 14, wherein the RRC semi-statically configured uplink transmission comprises at least one of the following:
RRC semi-statically configured physical uplink control channel PUCCH transmission;
RRC semi-statically configured configured grant PUSCH type 1 CG PUSCH Type 1 ;
RRC semi-statically configured configured grant PUSCH type 2 CG PUSCH Type2;
remaining CG PUSCH Type 2 other than the first CG PUSCH after CG PUSCH Type2 activated by downlink control information DCI; and
physical random access channel PRACH transmission.

16. The transmission method according to any one of claims 13 to 15, wherein the dynamically scheduled uplink transmission comprises at least one of the following:
PUSCH scheduled by an uplink grant UL grant;
the first CG PUSCH after CG PUSCH Type 2 activated by DCI;
PUSCH scheduled by a random access response RAR UL grant;
PUSCH scheduled by DCI format 0_0 scrambled by temporary cell radio network temporary identifier TC-RNTI;
dynamically scheduled PUCCH;
dynamically scheduled PRACH; and
dynamically scheduled sounding reference signal SRS.

17. The transmission method according to any one of claims 13 to 16, wherein the determining, by the network-side device, that a target slot in which a target uplink transmission of the terminal is located is an unavailable slot for the target uplink transmission, or determining that the target slot is not comprised in a transmission count of the target uplink transmission, in a case that a target condition is met, comprises:
in a case with the transmission count K being equal to 1 or greater than 1, when an interval between the first symbol for the target uplink transmission and the last symbol for the downlink reception is less than a first threshold, and/or an interval between the last symbol for the target uplink transmission and the first symbol for the downlink reception is less than a second threshold, determining that the target slot in which the target uplink transmission of the terminal is located is an unavailable slot for the target uplink transmission, or determining that the target slot is not comprised in the transmission count of the target uplink transmission; or
in a case with AvailableSlotCounting being started or enabled and the transmission count K being equal to 1 or greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determining that the target slot in which the target uplink transmission of the terminal is located is an unavailable slot for the target uplink transmission, or determining that the target slot is not comprised in the transmission count of the target uplink transmission; or
in a case with AvailableSlotCounting being started or enabled and the transmission count K being greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determining that the target slot in which the target uplink transmission of the terminal is located is an unavailable slot for the target uplink transmission, or determining that the target slot is not comprised in the transmission count of the target uplink transmission.

18. The transmission method according to any one of claims 13 to 16, wherein the dropping, by the network-side device, the target uplink transmission comprises:
in a case with the transmission count K being equal to 1 or greater than 1, when an interval between the first symbol for the target uplink transmission and the last symbol for the downlink reception is less than a first threshold, and/or an interval between the last symbol for the target uplink transmission and the first symbol for the downlink reception is less than a second threshold, determining that the target slot in which the target uplink transmission of the terminal is located is an available slot for the target uplink transmission, or determining that the target slot is comprised in the transmission count of the target uplink transmission; or
in a case with the transmission count K being equal to 1 or greater than 1, learning that the terminal does not expect the interval between the first symbol for the target uplink transmission and the last symbol for the downlink reception to be less than the first threshold, and/or learning that the terminal does not expect the interval between the last symbol for the target uplink transmission and the first symbol for the downlink reception to be less than the second threshold; or
in a case with the transmission count K being equal to 1 or greater than 1, when the interval between the first symbol for the target uplink transmission and the last symbol for the downlink reception is less than the first threshold, and/or the interval between the last symbol for the target uplink transmission and the first symbol for the downlink reception is less than the second threshold, dropping, by the network-side device, the target uplink reception; or
in a case with AvailableSlotCounting being not started or not enabled and the transmission count K being equal to 1 or greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determining that the target slot in which the target uplink transmission of the terminal is located is an available slot for the target uplink transmission, or determining that the target slot is comprised in the transmission count of the target uplink transmission; or
in a case with AvailableSlotCounting being not started or not enabled and the transmission count K being equal to 1 or greater than 1, learning that the terminal does not expect the interval between the first symbol for the target uplink transmission and the last symbol for the downlink reception to be less than the first threshold, and/or learning that the terminal does not expect the interval between the last symbol for the target uplink transmission and the first symbol for the downlink reception to be less than the second threshold; or
in a case with AvailableSlotCounting being not started or not enabled and the transmission count K being equal to 1 or greater than 1, when the interval between the first symbol for the target uplink transmission and the last symbol for the downlink reception is less than the first threshold, and/or the interval between the last symbol for the target uplink transmission and the first symbol for the downlink reception is less than the second threshold, dropping, by the network-side device, the target uplink reception; or
in a case with AvailableSlotCounting being started or enabled and the transmission count K being equal to 1 or greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determining that the target slot in which the target uplink transmission of the terminal is located is an available slot for the target uplink transmission, or determining that the target slot is comprised in the transmission count of the target uplink transmission; or
in a case with AvailableSlotCounting being started or enabled and the transmission count K being equal to 1, when an interval between the first symbol for the target uplink transmission and the last symbol for the downlink reception is less than the first threshold, and/or an interval between the last symbol for the target uplink transmission and the first symbol for the downlink reception is less than the second threshold, determining that the target slot in which the target uplink transmission of the terminal is located is an available slot for the target uplink transmission, or determining that the target slot is comprised in the transmission count of the target uplink transmission; or
in a case with AvailableSlotCounting being started or enabled and the transmission count K being equal to 1, learning that the terminal does not expect the interval between the first symbol for the target uplink transmission and the last symbol for the downlink reception to be less than the first threshold, and/or learning that the terminal does not expect the interval between the last symbol for the target uplink transmission and the first symbol for the downlink reception to be less than the second threshold; or
in a case with AvailableSlotCounting being started or enabled and the transmission count K being greater than 1, when an interval between the first symbol for the target uplink transmission and the last symbol for the downlink reception is less than the first threshold, and/or an interval between the last symbol for the target uplink transmission and the first symbol for the downlink reception is less than the second threshold, determining that the target slot in which the target uplink transmission of the terminal is located is an available slot for the target uplink transmission, or determining that the target slot is comprised in the transmission count of the target uplink transmission.

19. The transmission method according to any one of claims 12 to 18, wherein the downlink reception comprises at least one of the following:
synchronization signal/physical broadcast channel block SSB;
at least one of type 0 common search space Type0 CSS, Type0A CSS, Type1 CSS, and Type2 CSS; and
downlink search space SS associated with control resource set #0 CORESET #0.

20. The transmission method according to claim 19, wherein the SSB comprises at least one of the following:
SSB configured by synchronization broadcast block position in burst ssb-PositionsInBurst;
SSB configured by nonCellDefiningSSB (nonCellDefiningSSB) related signaling;
SSB configured by dedicated downlink bandwidth part BWP-DownlinkDedicated signaling;
SSB configured by terminal-specific signaling UE-specific signaling; and
SSB contained in a current active BWP of the terminal.

21. The transmission method according to any one of claims 12 to 20, wherein the first capability information comprises at least one of the following:
having a half-duplex capability; and
having no full-duplex capability.

22. The transmission method according to any one of claims 12 to 21, wherein the terminal comprises a reduced-capability terminal RedCap UE.

23. A transmission apparatus, comprising:
a first transmission module, configured to report first capability information to a network-side device; wherein the first capability information is used to indicate that the terminal does not expect the network-side device to enable or configure AvailableSlotCounting for the terminal; or
in a case that a target condition is met, perform at least one of the following:
determining that a target slot in which a target uplink transmission of the terminal is located is an unavailable slot for the target uplink transmission, or determining that the target slot is not comprised in a transmission count of the target uplink transmission;
not expecting resource overlapping between the target uplink transmission and downlink reception, or not expecting that a switching time between the target uplink transmission and downlink reception to be less than a target time;
dropping the target uplink transmission; and
performing downlink reception; wherein
the terminal has a half-duplex capability or does not have a full-duplex capability.

24. A transmission apparatus, comprising:
a second transmission module, configured to receive first capability information reported by a terminal, wherein the first capability information is used to indicate that the terminal does not expect a network-side device to enable or configure AvailableSlotCounting for the terminal; and a processing module, configured to skip enabling or configuring AvailableSlotCounting for the terminal; or
the second transmission module is configured to: in a case that a target condition is met, perform at least one of the following:
determining that a target slot in which a target uplink transmission of the terminal is located is an unavailable slot for the target uplink transmission, or determining that the target slot is not comprised in a transmission count of the target uplink transmission;
configuring no overlapping resource being present between the target uplink transmission and the downlink reception, or configuring a switching time between the target uplink transmission and downlink reception being not less than the target time;
dropping a target uplink reception;
receiving a target uplink transmission; and
performing downlink transmission; wherein
the terminal has a half-duplex capability or does not have a full-duplex capability.

25. A terminal, comprising a processor and a memory, wherein a program or instructions capable of running on the processor are stored in the memory, and when the program or the instructions are executed by the processor, the steps of the transmission method according to any one of claims 1 to 11 are implemented.

26. A network-side device, comprising a processor and a memory, wherein the memory stores a program or instructions capable of running on the processor, wherein when the program or the instructions are executed by the processor, the steps of the transmission method according to any one of claims 12 to 22 are implemented.

27. A readable storage medium, wherein the readable storage medium stores a program or instructions, and when the program or instructions are executed by a processor, the steps of the transmission method according to any one of claims 1 to 11 are implemented, or the steps of the transmission method according to any one of claims 12 to 22 are implemented.
